(19) Europäisches Patentamt

European Patent Office

Office européen des brevets

(11) **EP 1 298 595 A2**

(12) **EUROPEAN PATENT APPLICATION**

(43) Date of publication:
02.04.2003 Bulletin 2003/14

(51) Int Cl.$^7$: **G06T 15/50**

(21) Application number: **02021196.7**

(22) Date of filing: **24.09.2002**

| | |
|---|---|
| (84) Designated Contracting States:<br>**AT BE BG CH CY CZ DE DK EE ES FI FR GB GR IE IT LI LU MC NL PT SE SK TR**<br>Designated Extension States:<br>**AL LT LV MK RO SI** | (71) Applicant: **Sony Computer Entertainment Inc.**<br>**Tokyo 107-0052 (JP)** |
| (30) Priority: **26.09.2001 JP 2001294507**<br>**20.09.2002 JP 2002276218** | (72) Inventor: **Naoi, Junichi**<br>**7-chome, Minato-ku, Tokyo 107-0052 (JP)** |
| | (74) Representative:<br>**Manitz, Finsterwald & Partner GbR**<br>**Postfach 31 02 20**<br>**80102 München (DE)** |

(54) **Pixel rendering**

(57) A rendering processing device includes a subpixel buffer (68) having a rendering region which corresponds to a display region of a display (55), a color buffer (69) that registers a color value of a pixel, and a Z buffer (70) for registering a Z value of the pixel, and renders the pixel in the rendering region in accordance with the color value and Z value of the pixel to be displayed. When there is a new pixel to be rendered, it is verified whether an empty region for registering the color value and Z value of the new pixel exists in the buffers (69) and (70), or not, and when no empty region exists, the color value and Z value of the new pixel and the registered color values and Z values are compared with each other, the most approximate color values or Z values are integrated together to produce an empty region.

FIG.3

EP 1 298 595 A2

**Description**

The present invention relates to an image rendering technique for realizing antialiasing with a small number of resources and without any degradation of coloring or the like.

In recent years, in a system that conducts real time image processing such as a game console device, the high integration of hardware such as a processor or a memory and the high speed of a processing clock have been advanced significantly. As a result, recently, it becomes possible to generate an image that is fine, rich in diversity and high in reality in a real time fashion, which could not be achieved up to now.

On the other hand, a television monitor device or the like which is normally used as a two-dimensional screen on which an image is displayed cannot follow the high image quality in the recent years. For example, in the television monitor device of the NTSC standard which is of a standard television broadcast system, the display is conducted with the upper limit of a low resolution which is about 640 x 448 dots per one frame (two fields).

In the case where the image is displayed on the two-dimensional screen which is low in resolution as described above, when an edge of the image is, for example, oblique with respect to the screen, a step-like zigzag along pixels that are structural units of the image, which is so called "jaggy", is distinguished on the edge portion of the image. The jaggy is a virtual image that results from mapping the edge portion of the image which should be originally smooth to discrete values which are the pixels on the screen, and is generally called "alias".

Therefore, in the system that processes the image that is outputted to the two-dimensional screen which is relatively low in resolution, a process for removing the alias or preventing the alias from being distinguished, that is, "antialiasing" is generally conducted to generate a smooth image without any jaggy.

At present, as the antialiasing manner, there have been known scene antialiasing and edge antialiasing both of which will be described below.

1) Scene antialiasing

In the scene antialiasing, a sampling point is changed by a subpixel unit resulting from segmentizing one pixel, and plural sheets of images which have been obtained by sampling of the subpixel unit are averaged, to thereby realize the antialiasing over the entire one screen.

As a method of changing the sampling point of the subpixel unit, there are an ordered method and a stochastic (jittering) method. The ordered method is a method of sampling a predetermined subpixel position, and the stochastic method is a method of determining the sampling point at random to conduct the sampling. The stochastic method is advantageous in that a high-quality image is obtained at a smaller number of sampling points than that of the ordered method.

The scene antialiasing that is realized by the ordered method and the stochastic method can be classified into a method of averaging the image having a high resolution-several times as high as an original resolution and then reducing the resolution of the image to the original resolution to realize the scene antialiasing, and a method using an accumulation buffer memory (hereinafter referred to as "accumulation buffer") from the viewpoints of a rendering efficiency.

In the method of averaging the image that is high in resolution, an entire polygon is rendered in a rendering buffer memory (hereinafter referred to as "rendering buffer") with the high resolution several times as high as the original resolution, and thereafter the image that has been rendered in the rendering buffer is reduced to the image of the original sizes so as to be displayed, to thereby realize the scene antialiasing. This method can enhance the processing efficiency and conduct high-speed processing as the scene antialiasing because the number of times of data entering for antialiasing is only once per one polygon and also the processing includes a locality.

On the other hand, in the method using the accumulation buffer, there are prepared one rendering buffer having a capacity for at least one screen and another rendering buffer which is called "accumulation buffer", and when the entire polygon for one screen has been completely rendered in the rendering buffer, the sampling point is changed to render the entire polygon again, and a value of the image on the rendering buffer and the value obtained after the sampling point has been changed are sequentially added to each other by the accumulation buffer and then averaged, to thereby realize the scene antialiasing. The method using the accumulation buffer makes it possible to realize the entire-screen rendering processes of plural times where the sampling points are changed and the averaging process by using the buffers for two screens consisting of the rendering buffer and the accumulation buffer.

2) Edge antialiasing

The image which is displayed on the two-dimensional screen is most liable to be affected by the low resolution in the case where neighboring pixels are remarkably different from each other in brightness and tone. There are many cases in which different attributes are adjacent to each other at the edge portion of a polygon in the computer graphic image and form a boundary of the brightness or the tone. That is, at the edge portion of the polygon, the low resolution becomes alias and is liable to be noticeable. On the other hand, on portions other than the edge portion of the polygon, it is easy to prevent alias from occurring, for example, by mapping an appropriate texture or filtering.

Therefore, in order to prevent alias from being distinguished, only the edge portion of the polygon may be subjected to antialiasing. In the edge antialiasing, for example, sampling is increased at only the edge portion of the polygon, and values obtained by the respective samplings are averaged so as to realize the antialiasing of the edge portion. Also, because the edge antialiasing is conducted on only the edge portion, the effective processing can be performed as compared with the scene antialiasing.

Under the above-mentioned circumstances, in the image processing system for which real time processing is demanded and more particularly a public welfare system which is greatly demanded to be reduced in the costs, the edge antialiasing is frequently applied.

There exists a manner for more simply realizing the above-mentioned edge antialiasing. That is, there is a manner in which the pixel occupied ratio at which the edge portion of the polygon occupies the interior of a pixel is calculated, and an original color of the pixel is linearly interpolated with pixel occupied ratio thus calculated as $\alpha$ values which are translucent coefficients, and the $\alpha$ values are averaged when the polygon is rendered. This manner is also called "$\alpha$ blending" and applied in many image processing systems because a normal architexture can be applied other than a mechanism that calculates the pixel occupied ratio.

The scene antialiasing and the edge antialiasing as described above suffer from problems stated below, respectively.

In a case of the scene antialiasing:

In the method of averaging an image which is high in resolution to realize the scene antialiasing, the rendering buffer having a capacity several times as much as the capacity of a display buffer memory (hereinafter referred to as "display buffer") for storing data to be displayed on a two-dimensional screen therein. For example, in the case where 1 pixel is divided into 16 subpixels of 4 x 4 to conduct the over-sampling of 16 times, the rendering buffer requires the capacity 16 times as much as the capacity of the display buffer.

Also, in this method, there are required a process of writing plural sheets of images in the rendering buffer within a display period of time for one frame, a process of averaging the plural sheets of images which have been written therein, and other processes.

In other words, this method is disadvantageous in the costs in the case where the method is applied to an image processing system such as a game console device which is severe in the cost performance because this method requires a great memory region for only the antialiasing and also requires a high-speed memory access.

In the method of conducting the scene antialiasing by using the accumulation buffer, the rendering period of time linearly increases because the averaging process conducting the change and addition of the sampling points is conducted in a time series. Therefore, this method is likewise unsuitable for the scene antialiasing which is high in resolution.

In a case of the edge antialiasing:

The edge antialiasing is suited to the image processing system for which the real time processing is demanded rather than the scene antialiasing. Among the various edge antialiasing methods, in particular, a method of conducting a linear interpolation in accordance with the pixel occupied ratio is relatively advantageous because most of normal architextures can be applied to the method. However, this method suffers from such a drawback that a degradation occurs when, for example, two or more edges of the polygon exist within one pixel and a normal pixel cannot be obtained because the method is so designed as not to hold a plurality of colors with respect to one pixel. Also, the method using the $\alpha$ blending has a limit that rendering from the backside becomes necessary.

The present invention has been made under the above-mentioned circumstances, and therefore an object of the present invention is to provide a technique of realizing a rendering process with a high quality, at the low costs and in a real time fashion.

To achieve the above object, the present invention provides a rendering processing method, a rendering processing device, a semiconductor device, a rendering processing program and a recording medium.

According to one aspect of the present invention, there is provided a rendering-processing method in a computer product which includes a buffer having a pixel rendering region corresponding to a display region of a display (55) and a processor (52) that renders the pixels to be displayed on the display in the pixel rendering region, the method comprising the steps, which are executed by the processor *(52),* of:

when the new pixel to be rendered exists, comparing, by the processor (52), a feature of the new pixel with that of one or plural pixel which including pixel rendered in the buffer to detect combination of pixels in which the features mostly resembles each other,
integrating, by the processor (52), the features of the detected pixels.

**EP 1 298 595 A2**

According to one aspect of the present invention, there is provided a rendering processing method in a computer product which includes a first buffer (68) having a pixel rendering region corresponding to a display region of a display (55), a second buffer (69, 70) in which pixel attributes representing features of the pixels are registered, and a processor (52) that registers the pixel attributes of the pixels to be displayed on the display in the second buffer (69, 70) and renders the pixels in the pixel rendering region in accordance with the registered pixel attributes, the method comprising the steps, which are executed by the processor (52), of:

verifying whether an empty region for registering a pixel attribute of a new pixel therein exists in the second buffer (69, 70), or not, when the new pixel to be rendered exists;
comparing the pixel attribute of the new pixel with one or plural pixel attributes which have been registered in the second buffer (69, 70) to detect a plurality of pixels having the most approximate pixel attributes; and
integrating the pixel attributes of the plurality of pixels that have been detected together.

In the present specification, the "pixel attribute" comprises, for example, color value, brightness, Z value which represents depth from a predetermined position such as a view point (virtual view point) of sight from a display screen of a display (55), $\alpha$ value which is transparent coefficient, value of a vector, normal line, texture distortion value. Determination of approximation between pixel attributes may be performed, as to one dimensional comparison, by a relative value of a difference between object to be compared, such as brightness, Z values. Further, color difference etc., (as to two dimensional comparison), difference between color values etc., (as to three dimensional comparison) are added, and the approximation is determined by following measures.

As to comparison of vector scalar product, when an absolute value of vector scalar product of in the combination of vector is relatively small, executing approximation.

When an absolute value of difference between the elements to be compared is relatively small as compared with an average of the elements, executing approximation.

When an absolute value of difference between the elements to be compared is relatively small as compared with root mean square of the elements, executing approximation.

When an absolute value of the difference between the elements to be compared is relatively small, executing approximation.

As to brightness and color difference, it may be derived from known formula such as RGB = YCbCr, alternatively, color value itself may include brightness value and/or color difference value.

As to procedure for integration, it may comprise averaging of pixel attributes of two pixel to be compared, or determining the attribute of one of the pixel as integrated attribute, etc.. When the number of pixels which belong to one of attributes is different from the number of pixels which belong to other attribute, the pixel attribute having greater number of pixels is selected to be "integrated attribute". In this case, it is desirable to detect the number of pixel for each pixel attribute.

The method may be added with the following procedures as variations.

That is, in the case where all of the integrated pixel attributes have been already registered in the second buffer (69, 70), the pixel attribute of the new pixel or integrated pixel attribute is registered in at least one of the registered regions.

In case a pixel rendering region in which no rendering is required remains in the first buffer (68) in spite of rendering of the new pixel, inhibiting registration of the pixel attributes of the new pixel in the second buffer (69, 70). Alternatively, an empty region exists in the second buffer (69, 70), and a pixel rendering region in which no rendering is required remains in the first buffer (68) in spite of rendering of the new pixel, integrating the pixel attributes of pixels in the first buffer (68), excluding the remaining pixel in which no rendering is required.

In the case Z value representing depth from a predetermined position is included in the pixel attribute, the processor (52) executes a hidden surface removal process that compares the Z value of the new pixel with the Z value that have been already registered in the second buffer (69, 70), detects a pixel that is positioned relatively backward when being viewed from the display screen, and does not allow the detected pixel to be displayed on the display screen prior to the verifying step.

In the case the Z value representing depth from a predetermined position is included in the pixel attribute, the processor (52) executes the integrating process by integrating other pixel attributes of plurality of pixels having the most approximate Z values into one composite pixel attribute at a distribution ratio corresponding to the number of pixels having the respective color values.

According to another aspect of the present invention, there is provided a rendering processing method in a computer product including a first buffer (68) having a pixel rendering region corresponding to a display region of a display (55), a second buffer (69, 70) in which pixel attributes are registered, and a processor (52) that registers the pixel attributes of the pixels to be displayed on the display in the second buffer (69, 70) and renders the pixels in the pixel rendering region in accordance with the registered pixel attributes, the method comprising the steps of:

verifying whether pixel attributes which are different from a pixel attribute of a new pixel are registered in the second buffer (69, 70), or not, by the processor (52), when the new pixel to be rendered exists; and

integrating the pixel attributes together by the processor (52) when the pixel attributes which are different from the pixel attribute of the new pixel are registered.

According to still another aspect of the present invention, there is provided a rendering processing method in a computer product having a subpixel buffer which includes a plurality of subpixel rendering regions corresponding to a display region for each pixel of a display (55) and having a subpixel which is obtained by over-sampling rendered in each of the subpixel rendering regions, a pixel buffer for registering a pixel attribute which represents a pixel feature of the subpixel including depth from a predetermined position, and a processor (52) that registers the pixel attribute of the subpixel to be displayed on the display in the pixel buffer, and renders the subpixel in the subpixel rendering region in accordance with the registered pixel attribute, the method comprising the steps, which are executed by the processor (52), of:

comparing, when the new subpixel to be rendered exists, a Z value of a new subpixel with Z values registered in the pixel buffer to detect a subpixel, which included the new subpixel, that is positioned relatively backward when being viewed from a display screen, and generating a subpixel mask that masks the subpixel rendering region for rendering the detected subpixel;

verifying, when the subpixels to be rendered exist in the generated subpixel mask, whether an empty region for registering pixel attributes of the subpixels to be rendered exists or not;

comparing, when the empty region for registering does not exists, the pixel attribute of the new subpixel with that of registered subpixel to detect a plurality of subpixels having the most approximate pixel attributes; and

integrating the pixel attributes of the plurality of subpixels detected, to suppress an increase in the registration region for pixel attribute in the pixel buffer.

This rendering processing method may be added with procedures stated below as variations.

In the case a pixel rendering region in which no rendering is required remains in the subpixel buffer in spite of rendering of the new pixel, inhibiting registration of the pixel attributes of the new pixel in the pixel buffer. Alternatively, in case an empty region exists in the pixel buffer, and a pixel rendering region in which no rendering is required remains in the subpixel buffer in spite of rendering of the new pixel, integrating the pixel attributes of pixels in the subpixel buffer, excluding the remaining pixel in which no rendering is required.

In case all of the pixel attribute of most approximate subpixels have been already registered, the processor (52) integrates those pixel attributes into one integrated attribute at a distribution ratio corresponding to the number of pixels having an identical pixel attribute, overwrites the composite color value on any one registration region for the plurality of pixel attributes to be integrated, and registers the pixel attribute of the new subpixel in other regions. Alternatively, by selecting an attribute of one of the subpixel as one representing pixel attribute, integrated pixel attribute may be obtained.

The number of registration enable regions in the pixel buffer is limited with the number of element regions which is determined in accordance with the bit depth of the subpixel to be processed. The "bit depth" is a scale representative of the number of colors in an image.

According to yet still another aspect of the present invention, there is provided a rendering processing device comprising:

a first buffer (68) having a pixel rendering region corresponding to a display region of a display (55);

a second buffer (69, 70) in which pixel attributes representing pixel features of pixels are registered; and

a processor (52) that registers the pixel attributes of the pixels to be displayed on the display in the second buffer (69, 70) and renders the pixels in the pixel rendering region in accordance with the registered pixel attributes,

wherein the processor (52) verifies whether an empty region for registering a pixel attribute of a new pixel therein exists in the second buffer (69, 70), or not, when the new pixel to be rendered exists, compares the pixel attribute of the new pixel with one or plural pixel attributes which have been registered in the second buffer (69, 70) to detect a plurality of pixels having the most approximate pixel attributes, and integrates the pixel attributes of the plurality of pixels that have been detected together.

In the case of the rendering processing device that represents one pixel by the assembly of a plurality of subpixels, the pixel rendering region is divided into a plurality of subpixel rendering regions with respect to a display region of each pixel in the display, the subpixels which are obtained by over-sampling are rendered in the respective subpixel rendering regions, the pixel attribute includes Z value representing depth from a predetermined position, and the second buffer (69, 70) is formed with at least a Z buffer (70) for registering the Z values therein. In the rendering processing device, the processor (52) compares the Z value of the new pixel with all of the Z values that have been registered in the Z buffer (70), detects the subpixel rendering region for rendering the subpixel, including the new subpixel, that is positioned relatively backward, and generates data where the detected subpixel rendering region is masked.

From the viewpoints of suppressing an increase in the registration region of the pixel attribute, the processor (52) operates so as to process the subpixel mask which is obtained by implementing the logical OR operation of the generated data which is related to all of the subpixels that constitute the new pixel as data to be overwritten in the pixel rendering region.

In the rendering processing device according to the present invention, from the viewpoint of improving the real time processing, when one bank is formed of a rendering buffer for pixel rendering, another bank includes a two-bank structured frame buffer that changes over to a display buffer for displaying the rendered pixels on the display, and the first buffer (68) and the second buffer (69, 70) are temporarily formed in the rendering buffer.

According to yet still another aspect of the present invention, there is provided a semiconductor device on which there are mounted a first buffer (68) having a pixel rendering region corresponding to a display region of a display (55) and a second buffer (69, 70) in which pixel attributes representing pixel features are registered, or which is so structured as to access to the first buffer (68) and the second buffer (69, 70), and on which there is mounted a processor (52) that registers the pixel attribute of a pixel to be displayed on the display in the second buffer (69, 70) and renders the pixel in the pixel rendering region in accordance with the pixel attribute that has been registered in the second buffer (69, 70), wherein the processor (52) verifies whether an empty region for registering a pixel attribute of a new pixel therein exists in the second buffer (69, 70), or not, when the new pixel to be rendered exists, compares the pixel attribute of the new pixel with one or plural pixel attributes which have been registered in the second buffer (69, 70) to detect a plurality of pixels having the most approximate pixel attributes, and integrates the pixel attributes of the plurality of pixels that have been detected together.

The processor (52) may conduct the above operation in cooperation with other processing means that is disposed in the exterior of the device.

According to yet still another aspect of the present invention, there is provided a semiconductor device adaptive to over-sampling, which includes a plurality of subpixel rendering regions corresponding to a display region of each pixel in a display, and includes, in each of the subpixel rendering regions, a subpixel buffer in which a subpixel obtained by over-sampling is rendered, a color buffer for registering a color value of the subpixel therein and a Z buffer (70) for registering a Z value of the subpixel, or is so structured as to access to the subpixel buffer, the color buffer and the Z buffer (70), and on which there is mounted a processor (52) that registers the color value of the subpixel to be displayed on the display in the color buffer, registers the Z value of the subpixel in the Z buffer (70), and renders the subpixel in the subpixel rendering region in accordance with the registered color value and Z value.

The processor (52) compares a Z value of a new subpixel with all of Z values within the Z buffer (70) to detect a subpixel that is positioned relatively backward when being viewed from a display screen of the display, and generates a subpixel mask that masks the subpixel rendering region for rendering the detected subpixel when the new subpixel to be rendered exists; verifies whether an empty region for registering all of the color values and/or the Z values of the subpixels to be rendered therein exists, or not, when the subpixels to be rendered exist in the generated subpixel mask; compares the color value and/or the Z value of the new subpixel which cannot be registered with the color values and/or the Z values which have been registered to detect a plurality of subpixels having the most approximate color values and/or Z values; and integrates the color values of the plurality of subpixels detected together and/or the Z values of the plurality of subpixels detected together, to suppress an increase in the registration region in the color buffer or the Z buffer (70).

According to yet still another aspect of the present invention, there is provided a rendering processing program which can be read by a computer which includes a memory device and is connected with a display, the rendering processing program allows a first buffer (68) having a pixel rendering region corresponding to a display region of the display and a second buffer (69, 70) in which pixel attributes including color values and/or Z values of pixels are registered to be formed in the memory device, gives functions of registering the pixel attribute of a pixel to be displayed on the display in the second buffer (69, 70) and rendering the pixel in the pixel rendering region in accordance with the registered pixel attribute to a processor (52) mounted on the computer, and operates the processor (52) so as to verify whether an empty region for registering a pixel attribute of a new pixel therein exists in the second buffer (69, 70), or not, when the new pixel to be rendered exists, compare the pixel attribute of the new pixel with one or plural pixel attributes which have been registered in the second buffer (69, 70) to detect a plurality of pixels having the most approximate pixel attributes, and integrate the pixel attributes of the plurality of pixels that have been detected together.

In general, the rendering processing program is recorded in a recording medium which is readable by the computer before shipping.

These and other objects and advantages of this invention will become more fully apparent from the following detailed description taken with the accompanying drawings in which:

Figs. 1A to 1D are explanatory diagrams showing rendering buffers, in which Fig. 1A is a diagram showing a memory region of a subpixel buffer which is 1 bit x 16 words in depth for one pixel, Fig. 1B is a diagram showing one structural example of a pixel buffer (LUI), Fig. 1C is a diagram showing a memory region of a subpixel buffer which is 2 bits x 16 words in depth for one pixel, and Fig. 1D is a diagram showing one structural example of a pixel buffer (LUT);

Fig. 2 is a flowchart showing a rendering processing method;

Fig. 3 is a block diagram showing a rough structural example in the case where the rendering process according to an embodiment of the present invention is realized by hardware;

Fig. 4 is a block diagram showing a rough structural example of a subpixel composite unit;

Fig. 5 is a circuit block diagram showing one structural example of a hidden surface removal within the subpixel composite unit;

Fig. 6 is a circuit block diagram showing one structural example of a mask composite/Z select block within the subpixel composite unit;

Fig. 7 is a circuit block diagram showing one structural example of a color composite block within the subpixel composite unit;

Fig. 8 is a diagram for explanation of the respective regions of a subpixel mask and the subpixel buffer;

Figs. 9A to 9C are diagrams showing a memory region of the subpixel buffer which is in an initial state for one pixel and the pixel buffer (LUT);

Fig. 10 is a diagram for explanation of an example of a polygon and the subpixel mask which is generated from a pixel including an edge portion of the polygon;

Figs. 11A to 11C are diagrams for explanation of the states of the subpixel buffer and the LUT when the subpixel mask which is generated from the pixel of the polygon shown in Fig. 10 is entered, and the operation of a subpixel composite unit;

Figs. 12A to 12C are diagrams for explanation of the states of the subpixel buffer and the LUT when a subpixel mask is newly entered after color composition shown in Figs. 11A to 11C, and the operation of the subpixel composite unit;

Figs. 13A to 13C are diagrams for explanation of the states of the subpixel buffer and the LUT when a subpixel mask is newly entered after color composition shown in Figs. 12A to 12C, and the operation of the subpixel composite unit;

Figs. 14A to 14C are diagrams for explanation of the states of the subpixel buffer and the LUT when a subpixel mask is newly entered after color composition shown in Figs. 13A to 13C, and the operation of the subpixel composite unit;

Figs. 15A to 15C are diagrams for explanation of the states of the subpixel buffer and the LUT when a subpixel mask is newly entered after color composition shown in Figs. 14A to 14C, and the operation of the subpixel composite unit;

Figs. 16A to 16C are diagrams for explanation of the states of the subpixel buffer and the LUT when a subpixel mask is newly entered after color composition shown in Figs. 15A to 15C, and the operation of the subpixel composite unit;

Fig. 17 is a block diagram showing the structural example in the case where the rendering process according to the embodiment of the present invention is realized by software; and

Fig. 18 is a flowchart showing a process in the case where a CPU of a computer executes graphic rendering processing program according to the embodiment of the present invention.

Now, a description will be given in more detail of preferred embodiments of the present invention with reference to the accompanying drawings.

An embodiment in which the present invention is applied to a rendering processing method which realizes the antialiasing of an over-sampling image with a reduced number of resources will be described.

The rendering processing method can be implemented by an image processing device and system having a processor that can access to the above-mentioned rendering buffers, and a semiconductor device that constitutes the parts of the image processing device and system. In the description, for ease of explanation, a pixel attribute is treated as pixel color value (including brightness) and Z value representing depth from a virtual sight point.

First, an example of the structural elements of a rendering buffer which is required in implementing the rendering processing method will be described.

The rendering buffer is formed for each of pixels with one subpixel buffer and a pixel buffer that stores color buffers and Z buffers of the same number as that of element regions which correspond to the bit depth of the subpixel buffer as a lookup table (hereinafter referred to as "LUT").

The "bit depth" is a scale that represents the number of colors in an image as described above, and in the case of an bit-map image, two colors are represented by one bit (= $2^1$), 16 colors are represented by 4 bits (=$2^4$), 256

colors are represented by 8 bits (= $2^8$), and 16777216 colors are represented by 24 bits (= $2^{24}$).

The subpixel buffer is divided into a plurality of subpixel rendering regions with respect to a display region of the display, that is, a display region for one pixel of the display buffer, and a subpixel (including a mask portion) which is obtained by over-sampling is rendered in each of the subpixel rendering regions.

The color value of the subpixel which is rendered in the subpixel rendering region of the subpixel buffer is registered in the color buffer.

The Z value of the subpixel which is rendered in the subpixel rendering region of the subpixel buffer is registered in the Z buffer in association with the color value which has been registered in the color buffer.

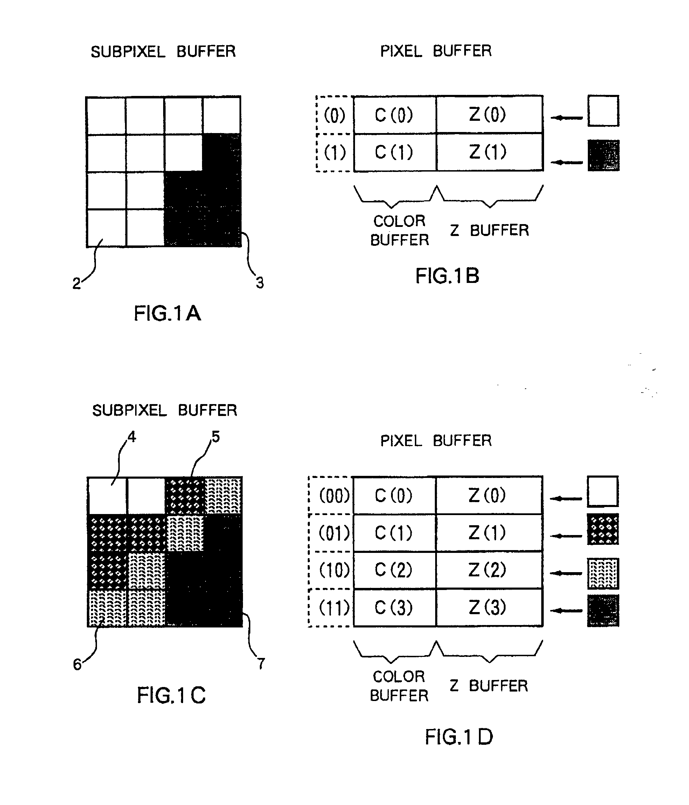

Figs. 1A to 1D are explanatory diagrams showing the above-mentioned rendering buffers, and show the structural elements in the case of conducting the over-sampling of 16 times which are 4 x 4 in one pixel as a simple example.

Fig. 1A shows a subpixel buffer which is 1 bit x 16 words in depth, and Fig. 1B shows a pixel buffer corresponding to the subpixel buffer.

In the case where the depth is 1 bit, data which is rendered in the respective subpixel rendering regions of the subpixel buffer is represented by binary values consisting of "0" and "1". Also, the color value (C(0)) and the Z value (Z(0)) of the subpixel corresponding to a region 2 in which the bit "0" is rendered in the subpixel buffer are registered in a upper element region (0) of the LUT. Also, C(1) and Z(1) which are the color value and the Z value of the subpixel corresponding to a region 3 in which "1" is rendered in the subpixel buffer, respectively, are registered in a lower element region (1) indicated by a broken line. In the case where the color value and the Z value of the LUT are represented by 32 bits, respectively, the data size for one pixel is 144 bits at the maximum.

Fig. 1C shows the subpixel buffer which is 2 bits and 16 words in depth, and Fig. 1D is a pixel buffer corresponding to the subpixel buffer.

In the case where the depth is 2 bits, the bits which are rendered in the respective subpixel rendering regions of the subpixel buffer are represented by four values consisting of "00", "01", "10" and "11". Also, the color value (C(0)) and the Z value (Z(0)) of the subpixel corresponding to a region 4 in which the bits "00" are rendered in the subpixel buffer are registered in a uppermost element region (00) of the LUT, the color value (C(1)) and the Z value (Z(1)) of the subpixel corresponding to a region 5 in which the bits "01" are rendered in the subpixel buffer are registered in a second upper element region (01) of the LUT, the color value (C(2)) and the Z value (Z(2)) of the subpixel corresponding to a region 6 in which the bits "10" are rendered in the subpixel buffer are registered in a third upper element region (10) of the LUT, and the color value (C(3)) and the Z value (Z(3)) of the subpixel corresponding to a region 7 in which the bits "11" are rendered in the subpixel buffer are registered in a lowermost element region (11) of the LUT. In the case where the color value and the Z value of the LUT are represented by 32 bits, respectively, the data size for one pixel is 288 bits at the maximum.

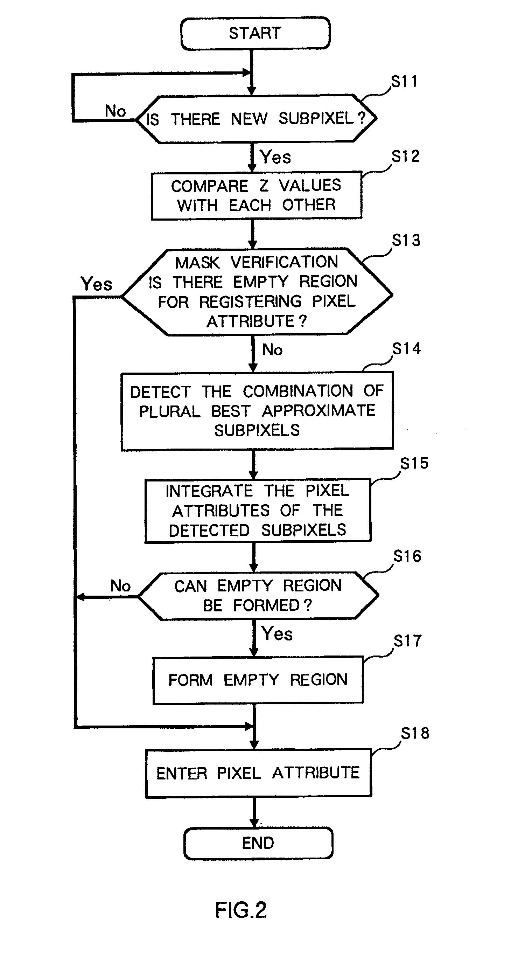

Subsequently, the operation procedure of the processor when the characterized rendering processing method is conducted by accessing to the above-mentioned rendering buffer will be described with reference to Fig. 2. The following operation made by the processor is enabled by reading a given computer program recorded in the computer readable recording medium through the processor.

(Step S11)

It is judged whether a new subpixel to be rendered exists, or not. Specifically, it is judged whether a polygon and other images which should be displayed on a display are entered from the external, or not. In the case where no new subpixel exists, the rendering process becomes in a pause state.

(Step S12)

When the new subpixel exists (yes in Step S11), the Z value of the new subpixel is compared with all of the Z values within the Z buffer, and a subpixel which is positioned relatively backward when being viewed from a display screen of the display is detected. Also, a subpixel mask that masks a subpixel rendering region for rendering the detected subpixel is generated.

(Step S13)

When a subpixel to be rendered exists in the generated subpixel mask, it is verified whether an empty region for registering the color value or the Z value or both of those values of the subpixel to be rendered exist in the color buffer and the Z buffer, or not.

(Step S14)

When no empty region exists ("no" in Step S13), the color value and the Z value of the new subpixel which cannot be registered are compared with the color values and the Z values which have been registered, to thereby detect a plurality of subpixels each having the most approximate color value or Z value or both of those values.

It is judged whether the color values and the Z values of the subpixels are approximate to each other, or not, on the basis of any one of the following manners.

1) A brightness is calculated in accordance with the color value, and the combination of subpixels in which brightness difference between the pixels to be compared is small (having the most approximate color brightness is most approximate) is selected.

2) The combination of subpixels which are smaller in the sum of the absolute values of differences between the respective values of R (red), G (green) and B (blue) is selected. In this situation, as occasion demands, the respective values of R, G, and B are weighted.

3) Color differences are calculated other than the color brightness, and the combination of subpixels having the approximate color differences is selected.

4) Neighboring data which is small in the absolute value of a difference between the respective Z values is selected. In the reference using the difference of the Z value, if the data is defined in the polygon entering order from the front side in the depthwise direction from the point of vision, since integration which will be described below can be conducted taking a distance from the point of vision in the depthwise direction into consideration, the following processing is advantageously facilitated.

(Step S15)

The color values, the Z values, or both of those values of the plurality of subpixels which have been detected are integrated together, respectively.

(Step S16)

It is judged whether an empty region for registering the pixel attribute therein is formed, or not (enabled, or not). That is, in the case where the pixel attribute of the new subpixel is integrated with the pixel attribute which has been already registered, the empty region cannot (or need not) be formed in the color buffer and the Z buffer. On the contrary, in the case where both of the integrated color values and the integrated Z values have been already registered, at least one of the regions which have been already registered in the color buffer and the Z buffer can be set to an empty region.

(Step S17)

When the empty region can be formed (yes in Step S16), the empty region is formed in the color buffer and the Z buffer, respectively, to enable the new registration of the pixel attribute.

(Step S18)

The color value and the Z value of the new pixel are registered in the empty region, and rendering is enabled in the subpixel buffer.

The above-mentioned processing procedure is repeated every time the polygon and other images are entered, and an increase in the registration regions of the color buffer and the Z buffer in this situation is suppressed.

Through the above-mentioned rendering processing method, even if a large number of polygon colors are entered within one pixel, for example, as in the subpixel including boundaries of a large number of polygons which are not superimposed on each other, colors can be displayed on the display without any degradation, and also there is no case in which, for example, even if the polygons are superimposed on each other, colors of those polygons are mixed together and the colors are degraded. Also, there is no limit of the rendering direction as in the conventional art.

Moreover, because substantially accurate color is reproduced even if the capacities of the color buffer and the Z buffer are small, it is possible to remarkably reduce the capacities of those buffers which are prepared in advance. This makes it possible to realize the antialiasing at the low costs, with an actual resource, with a high quality and in a real time processing, which does not require the high-speed memory access as in the various conventional antialiasing.

In Fig. 2, a hidden surface removal process is conducted which masks the subpixel rendering region for rendering the subpixel that will be positioned relatively backward. However, this hidden surface removal process is not essential in the rendering processing method according to the present invention. In the case where the hidden surface removal process is not conducted, the processing of the above-mentioned Step S12 is passed.

Also, Fig. 2 shows the procedure in the case of rendering the over-sampling image with a high resolution. However, since the rendering processing method according to the present invention aids at the suppression of an increase in the registration region of the pixel buffer in the case where the polygon attributes including the color value and the Z value cannot be newly registered, the same can be applied to a rendering process by a normal pixel unit where over-sampling is not conducted.

(Rendering Processing Device)

Subsequently, an example of a rendering processing device which is suitable for the rendering processing method according to the present invention, in particular, the rendering processing method of a high-resolution image due to over-sampling will be described.

The rendering processing device can be realized in cooperation with a rendering processor, geometry processor and a main processor (CPU) the operation of which is regulated by computer program, a memory and other hardware resources.

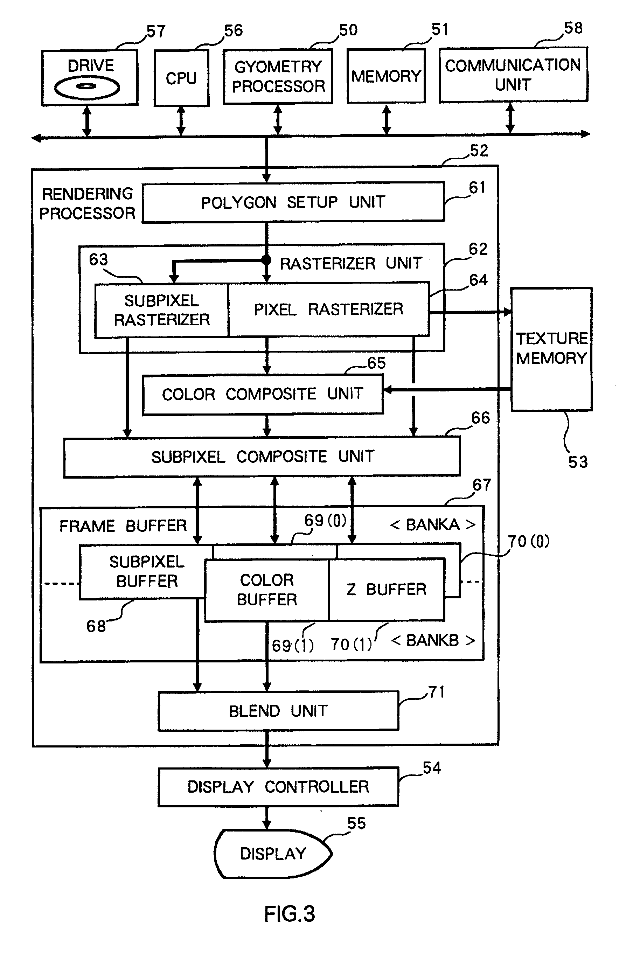

Fig. 3 is a structural diagram showing the image processing device. As shown in Fig. 3, the rendering processing device includes a geometry processor 50, a memory 51, a rendering processor 52, a CPU 56, a drive unit 57 and a communication unit which are connected to each other through a data bus, and a display controller 54 for displaying the processing result of the rendering processor 52 on a display 55. A texture memory 53 in which a texture attribute (color value or the like) is recorded is built in or attached onto the rendering processor 52.

The memory 51 stores therein graphic information such as a polygon to be rendered (displayed), for example, vertex information and vertex coupling information such as vertex coordinate values, the color values of R (red), G (green) and B (blue) at the respective vertexes, map coordinate values or vector values. The graphic information is read from various recording medium such as a CD-ROM, a DVD-ROM or a semiconductor memory which is loaded in the drive unit 57, or is taken in by the communication unit 58 through a communication medium using a cable or radio, a transmission medium or the like, under the control of the CPU 56.

The texture attribute which is recorded in the texture memory 53 is taken in through various recording medium such as a CD-ROM, a DVD-ROM or a semiconductor memory, a communication medium using a cable or radio, a transmission medium or the like.

The rendering processor 52 which is an example of the semiconductor device for a rendering process in accordance with the present invention, transforms the result data of the geometry processing which is transmitted from the geometry processor 50 into pixels, arranges the respective pixels in correspondence with the screen coordinates of the display 55, and generates screen data for displaying the respective pixels on a two-dimensional screen of the display 55. This processing is called "rendering process".

In order to realize the rendering process, the rendering processor 52 includes the functional components of a polygon setup unit 61, a rasterizer unit 62, a color composite unit 65, a subpixel composite unit 66, a frame buffer 67 and a blend unit 71 in cooperation with the computer program which is normally recorded in the interior of the rendering processor 52.

The polygon setup unit 61 takes in the result data of the geometry processing which is transmitted from the geometry processor 50, and conducts buffering of the result data, transforms data of the strip-like or fan-like polygon mesh structure into an independent polygon, and transmits the independent polygon to the rasterizer unit 62. The polygon setup unit 61 also conducts area culling and back culling and abandons an unnecessary polygon. In this manner, the efficiency of the processing which is conducted at the downstream rasterizer unit 62 is enhanced.

The rasterizer unit 62 analyzes the polygon through a known DDA (digital differential analyzer) or the like, and in the case of dealing with an over-sampling image, the rasterizer unit 62 is so structured as to include a subpixel rasterizer 63 and a pixel rasterizer 64.

The subpixel rasterizer 63 obtains the rendering region of the screen through a known over-sampling manner, and puts together a plurality of subpixel rendering regions for one pixel as one subpixel mask.

The pixel rasterizer 64 obtains the pixel attributes including texture UV coordinates (reference address of the texture) for referring to a texture color value by a pixel unit from the Z value, the color value and the texture memory 53.

The color value is transmitted to the color composite unit 65, and the Z value and the subpixel mask are supplied to the subpixel composite unit 66.

The color composite unit 65 composes the color value which is acquired from the pixel rasterizer 64 and the texture attribute (color value) which is supplied from the texture memory 53 in accordance with the texture UV coordinates to generate a rendering pixel color value. The rendering pixel color value is supplied to the subpixel composite unit 66.

The subpixel composite unit 66 detects a plurality of subpixels having the most approximate pixel attributes (color value, Z value, etc.) and integrates the pixel attributes of the detected subpixels together on the basis of the subpixel mask of a pixel that is newly entered, the subpixel mask which is saved in the subpixel buffer 68 by the rendering process before the pixel is newly entered, the color values and the Z values of the respective subpixels of the pixel which is newly entered, and the color values and the Z values which are registered in the color buffer 69 and the Z buffer 70 by the rendering process before the pixel is newly entered, as occasion demands. More specifically, the subpixel composite unit 66 integrates N kinds of color values into at least N-1 kinds of color values to generate a composite color value, and selects one representative Z value corresponding to the composite color value.

The color value or the composite color value, the representative Z value and the subpixel mask are consequently outputted from the subpixel composite unit 66. Those data are supplied to the frame buffer 67, and appropriately referred to or undated by the subpixel composite unit 66.

The frame buffer 67 is formed of a two-bank structured buffer memory which essentially consists of a bank A and a bank B. While one bank, for example, the bank A functions as the above-mentioned rendering buffer, the bank B which is the other bank functions as a display buffer which is used in displaying the rendered data on the display 55. In this way, the processing speed for rendering and displaying subsequent to rendering is improved.

The subpixel buffer 68, the color buffer 69 and the Z buffer 70 shown in Fig. 1 are temporarily formed in the bank that functions as the rendering buffer. Alternatively, the color buffer 69 and the Z buffer 70 are not temporarily formed in the rendering buffer, but may be nearly constantly formed in a memory region which is additionally disposed.

The subpixel mask is recorded in the subpixel buffer 68 so as to be updated as needed. The color buffer 69 and the Z buffer 70 are formed as the LUT, respectively, as described above. In this example, for simplification of description, the bit depth of the subpixel buffer 68 is set to one bit, but the bit depth is not limited by or to this example. In the case of the one-bit depth, the color buffer 69 is divided into two color buffers 69(0) and 69(1) which correspond to the element regions (0) and (1) of the LUT, and likewise the Z buffer 70 is divided into two Z buffers 70(0) and 70(1) which correspond to the element regions (0) and (1) of the LUT.

The blend unit 71 composes the pixel color values as represented by the following expression, by using data which is read from the subpixel buffer 68 and the color buffer 69, and outputs the composite pixel color value to the display controller 54.

$$Ccmp = (C(0)*num(0) + C(1)*num(1)/(num\,(0) + num\,(1))$$

where Ccmp is a pixel color value which has been composed, C(0) is the color value which has been stored in the color buffer 69(0), C(1) is the color value which has been stored in the color buffer 69(1), num(0) is the number of subpixels which are represented by the color value corresponding to C(0), num(1) is the number of subpixels which are represented by the color value corresponding to C(1), and num of subpixel is the number of subpixels for one pixel.

The display controller 54 generates a horizontal synchronous signal, a vertical synchronous signal and so on of the display 55, and sequentially extracts the color values of the subpixels from the frame buffer 67. As occasion demands, the display controller 54 composes the color values by the blend unit 71 and thereafter displays the composite color value on the two-dimensional screen of the display 55 as a two-dimensional image.

(The Structure of the Subpixel Composite Unit)

Now, the specific structure and the rough operation of the subpixel composite unit 66 having the main function of the rendering processor 52 will be described.

In the following description, various data are abbreviated as follows for convenience.

"Min" is a subpixel mask which is newly entered;
"Zin" is a Z value of the subpixel which is newly entered;
"Cin" is a color value of the subpixel which is newly entered;
"Mbuf" is a subpixel mask which has been stored in or read from the subpixel buffer 68;
"Mow" is a subpixel mask which is overwritten on the subpixel buffer 68;
"C(0)" is a color value which has been stored in or read from the color buffer 69(0);
"C(1)" is a color value which has been stored in or read from the color buffer 69(1);
"Z(0)" is a Z value which has been stored in or read from the Z buffer 70(0); and
"Z(1)" is a Z value which has been stored in or read from the Z buffer 70(1).

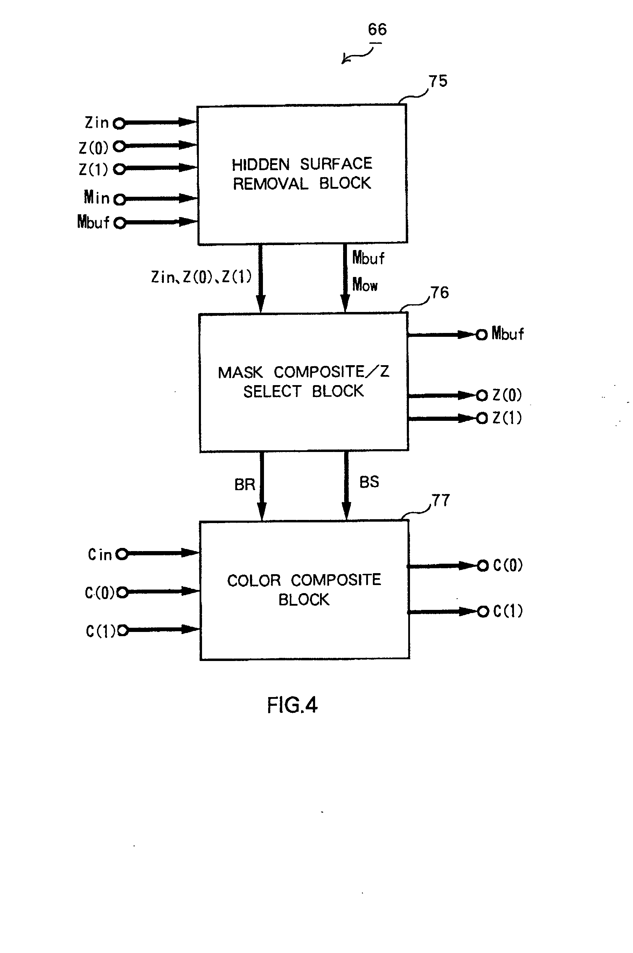

The subpixel composite unit 66 includes a hidden surface removal block 75, a mask composite/Z select block 76, and a color composition block 77, as shown in Fig. 4. Those blocks 75 to 77 are formed in cooperation with the hardware components including a semiconductor within the unit and software.

The hidden surface removal block 75 compares all of the Z values which are read from the Z buffer 70 with each other, to thereby obtain regions which are positioned relatively backward among the subpixel rendering regions which correspond to the Z values stored in the Z buffer 70 when being viewed from the point of sight. Then, the hidden surface removal block 75 implements the logical AND operation of the bit values of those backward positioned regions and the bit values of the regions to be rendered in the entered subpixel mask, and implements the logical OR operation of the logical ADD operation results of all the subpixels, to thereby conduct the hidden surface removal process. The hidden surface removal block 75 outputs data obtained by the hidden surface removal process as Mow.

More specifically, the hidden surface removal block 75 compares Zin with Z(0) and Z(1) which are read from the Z buffer 70, and outputs the assembly of the subpixel rendering regions which are visible from the surface of the display 55, that is, a virtual point of sight in the Min as Mow.

Zin, Z(0), Z(0), Mbuf which is outputted from the subpixel buffer 68, and Mow are outputted from the hidden surface removal block 75, and then supplied to the mask composite/Z select block 76.

The mask composite/Z select block 76 specifies the number of subpixel rendering regions which are visible from the virtual point of sight on the basis of the Mbuf and Mow which are supplied from the hidden surface removal block 75, and the number of kinds of the pixel attributes of the subpixel which is rendered in the specified subpixel rendering region as a pixel unit.

For example, in the case where the number of kinds of the pixel attributes is only one, the mask composite/Z select block 76 registers the Z value of that pixel attribute in one element region (for example, the element region (1)) of the LUT, and overwrites Mbuf of the subpixels which are visible from the virtual point of sight on the subpixel buffer 68. In this situation, the other element region (the element region (0) in this case) of the LUT is set in a disable state.

In the case where there are two kinds of pixel attributes, the mask composite/Z select block 76 selects any one of two Z values of those pixel attributes and registers the selected Z value in the element region (1) of the LUT, or allots and registers those two Z values in the element region (0) and the element region (1), respectively, and overwrites Mbuf of the subpixel which is visible from the virtual point of sight on the subpixel buffer 68.

In the case where there are three kinds of pixel attributes, the mask composite/Z select block 76 selects two approximate Z values among three Z values of those pixel attributes, that is, two Z values having a relatively small difference therebetween among Zin, Z(0) and Z(1). The mask composite/Z select block 76 further selects one Z value having a larger number of corresponding rendering regions among the selected two Z values as a representative Z value, and registers the selected representative Z value in one element region (for example, the element region (1)) of the LUT and registers the remaining one Z value which is not one of the two most approximate Z values in the other element region (the element region (0) in this case) of the LUT.

Also, the mask composite/Z select block 76 implements the logical OR operation of the bit values of the subpixel rendering regions which correspond to those two approximate Z values, respectively, and overwrites Mbuf including the bit values which have been subjected to the logical OR operation and the bit values of the subpixels which are visible from the virtual point of sight on the subpixel buffer 68.

The mask composite/Z select block 76 also outputs a select control signal BS that is used to select the representative Z value which is registered in the respective element regions of the LUT in accordance with the number of kinds of the pixel attributes as a select control signal used in selecting out the color value in the downstream color composite block 77. In addition, the mask composite/Z select block 76 outputs a signal which corresponds to the number of subpixel rendering regions corresponding to those two Z values, respectively as a composite ratio control signal BR used in composing the color values by the color composite block 77 when selecting those two most approximate Z values.

The color composite block 77 selects the color value according to the select control signal BS from the color value Cin of the new pixel and the color values C(0) and C(1) which are read from the LUT, and integrates the color values together (composes the colors) as occasion demands.

For example, when there is one kind of pixel attribute, the color composite block 77 registers the color value which corresponds to that pixel attribute in one element region (for example, the element region (1)) of the LUT on the basis of the select control signal BS. When there are two kinds of pixel attributes, the color composite block 77 integrates two color values which correspond to those two kinds of pixel attributes into one color value and registers the integrated color value in one element region (for example, the element region (1)) of the LUT, or allots and registers those two color values in the element regions (0) and (1) of the LUT on the basis of the select control signal BS. When there are three kinds of pixel attributes, the color composite block 77 selects two approximate color values among Cin, C(0) and C(1) in accordance with the select control signal BS, integrates those selected color values into one color value in accordance with the composite ratio control signal BR, registers the integrated color value in one element region (for example, the element region (1)) of the LUT, and registers the remaining one color value in the other element region (in this case, the element region (0) of the LUT.

As described above, the subpixel composite unit 66 always verifies whether the kind of pixel attributes of the entered subpixel exceeds the number of element regions of the LUT which has been already registered, or not. When the kind of pixel attributes exceeds the number of element regions of the LUT which has been already registered, the subpixel composite unit 66 integrates the data of two pixel attributes into one data in such a manner that the kind of pixel attributes which are registered for rendering falls within the number of element regions of the LUT which is determined in accordance with the bit depth, to thereby suppress an increase in the memory capacity.

Subsequently, the detailed structural example of the hidden surface removal block 75, the mask composite/ Z select block 76 and the color composite block 77 will be described.

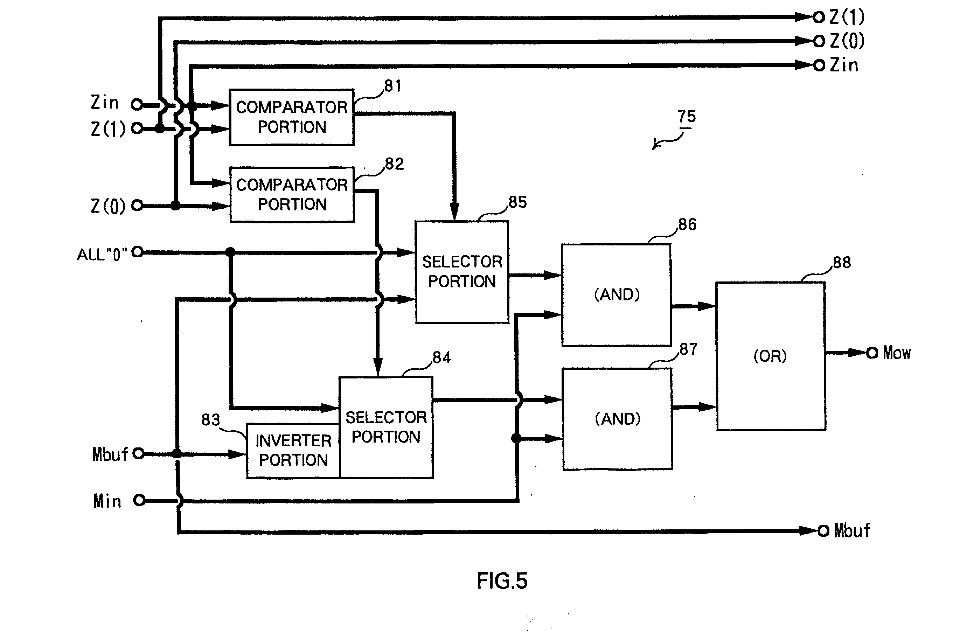

Fig. 5 is a structural diagram showing the details of the hidden surface removal block 75. In Fig. 5, a comparator portion 81 compares Z(1) read from the Z buffer 70 which is in an enable state, for example, the Z buffer 70(1) with the entered Zin, and outputs to a selector portion 85 the select control signal of "1" when Zin is closer to a virtual point of sight than Z(1) and the select control signal of "0" when Zin is farther from the virtual point of sight than Z(1). Likewise, a comparator portion 82 compares Z(0) read from the other Z buffer 70(0) which is in an enable state with Zin, and outputs to a selector portion 84 the select control signal of "1" when Zin is closer to a virtual point of sight than Z(0) and the select control signal of "0" when Zin is farther from the virtual point of sight than Z(1).

When the corresponding element regions (0) and (1) of the LUT is an empty region, the comparator portions 82 and 81 conduct the above-mentioned comparisons assuming that Z(0) and Z(1) are values farther from the virtual point of sight. As a result, the select control signals of "1" are outputted from the comparator portions 82 and 81.

The selector portion 85 is supplied with data (all"0") consisting of 16 "0" which correspond to the number of rendering regions of the subpixel mask for one pixel and Mbuf which is read from the subpixel buffer 68, and changes over any one of those data in accordance with the bit value of the select control signal which is outputted from the comparator portion 81 and outputs the changed-over data to a logical ADD operation portion (AND) 86. In this example, when the bit value of the select control signal is "0", the selector portion 85 outputs ALL"0", and when the bit value of the select control signal is "1", the selector portion 85 outputs Mbuf.

The selector portion 84 is supplied with All"0" and inverse data resulting from logically inverting Mbuf by the an inverter portion 83, changes over any one of those data in accordance with the bit value of the select control signal from the comparator portion 82 and outputs the changed-over data to a logical AND operation portion (AND) 87. In this example, when the bit value of the select control signal is "0", the selector portion 84 outputs All"0" and when the bit value of the select control signal is "1", the selector portion 84 outputs inverse data.

The logical AND operation portion 86 outputs the logical AND operation result of Mbuf or All"0" which is outputted from the selector portion 85 and Min to a logical OR operation portion 88. The logical AND operation portion 87 outputs the logical AND operation result of Mbuf or All"0" which is outputted from the selector portion 84 and Min to the logical OR operation portion 88. The logical OR operation portion 88 implements the logical OR operation of the output data from the logical AND operation portions 86 and 87, and supplies data of the operation results to the mask composite/Z select block 76 as a new Mow.

Mbuf, Zin, Z(0), and Z(1) in addition to Mow are supplied to the mask composite/Z select block 76 from the hidden surface removal block 75.

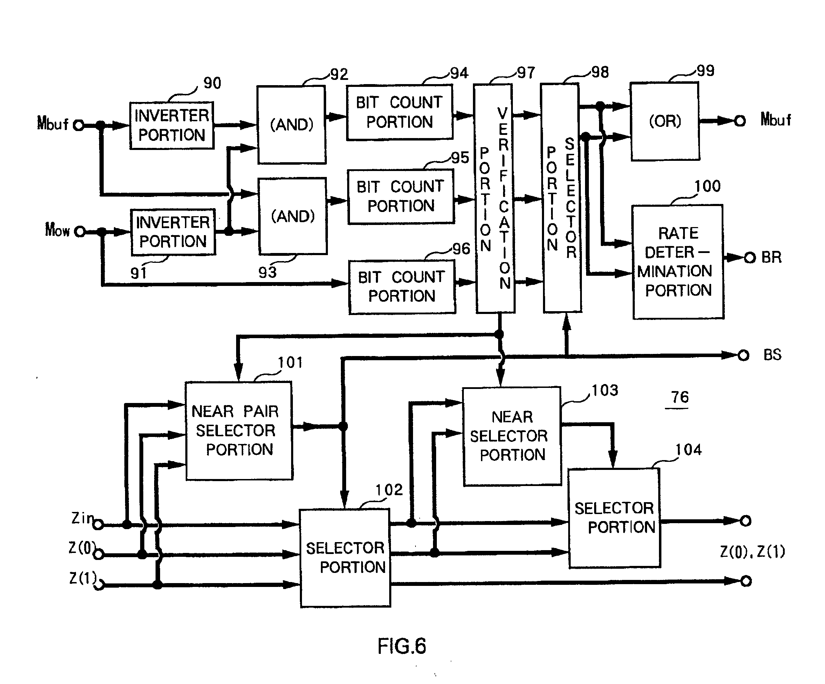

Fig. 6 is a structural diagram showing the details of the mask composite/Z select block 76.

In Fig. 6, Mbuf is supplied to the logical AND operation portion 93, and after Mbuf is inverted by the inverter portion 90, Mub is supplied to a logical AND operation portion 92. Also, Mow which has been transmitted from the hidden surface removal block 75 is supplied to a bit count portion 96, and after Mow is inverted by an inverter portion 91, Mow is supplied to the logical AND operation portions 92 and 93.

The inverter portions 90 and 91 output, particularly, logical 0 as a value corresponding to the respective rendering regions when the respective rendering regions of the subpixel buffer 68 are in a disable state.

The logical AND operation portion 92 supplies the logical AND operation result of the inverse data of Mbuf and the inverse data of Mow from the hidden surface removal block 75 to the bit count portion 94. The logical AND operation portion 93 supplies the logical AND operation result of the above Mbuf and the inverse data of Mow to a bit count portion 95.

The logical AND operation portion 93 outputs, particularly, "0" as a value corresponding to the respective regions when the subpixel rendering region of the subpixel buffer 68 is in the disable state.

The bit count portions 94 to 96 count the number of "1" included in the data which are inputted, respectively, and supply the count value of "1" and the input data (Mbuf, Mow) to a verification portion 97.

The verification portion 97 verifies the kind of pixel attributes that exist within one pixel on the basis of the count value of "1" which is transmitted from the bit count portions 94 to 96. The verification portion 97 then supplies the number of kinds of the pixel attributes and a signal representative of the count value corresponding to the number of kinds of the pixel attributes to a near pair selector portion 101 and a near selector portion 103.

The verification portion 97 also supplies the input data and the respective count values which are transmitted through the bit counter portions 94 to 96, the number of kinds of the pixel attributes and the signal representative of the count value corresponding to the number of kinds of the pixel attributes to the selector portion 98.

On the other hand, Zin, Z(0) and Z(1) which are transmitted from the hidden surface removal block 75 are supplied to the selector portion 102 and also supplied to the near pair selector portion 101.

The near pair selector portion 101 generates the select control signal BS for controlling the select operation of the selector portion 102, the selection portion 98 and the color composite block 77 on the basis of the number of kinds of the pixel attributes and the signal representative of the count value corresponding to the number of kinds of the pixel attributes which are transmitted from the verification portion 97, and the respective Z values which are transmitted from the hidden surface removal block 75. The near selector portion 103 selects one representative Z value on the basis of the number of kinds of the pixel attributes and the signal representative of the count value corresponding to the number of kinds of the pixel attributes which are transmitted from the verification portion 97, and the two Z values which are selected by the near pair selector portion 101.

The near pair selector portion 101 and the near selector portion 103 operate as follows.

When there is one kind of pixel attribute, the near pair selector portion 101 allows one Z value corresponding to a pixel attribute thereof to be outputted from the selector portion 102. The Z value is thereafter registered in, for example, the element region (1) of the LUT. The element region (0) of the LUT at this time is set in the disable state.

When there are two kinds of pixel attributes, the near pair selector portion 101 controls the select operation of the selector portion 102 in such a manner that two Z values corresponding to those two kinds of pixel attributes are supplied to the selector portion 104. In this situation, the near selector portion 103 controls the select operation of the selector portion 104 in such a manner that one Z value of two Z values which has the larger number of rendering regions, that is, the Z value corresponding to the larger count value is selected as a representative Z value. The representative Z value which is outputted from the selector portion 104 is thereafter registered in one element region (for example, the element region (1)) of the LUT.

When there are three kinds of pixel attributes, the near pair selector portion 101 controls the select operation of the selector portion 102 in such a manner that two approximate Z values among three Z values corresponding to the three kinds of pixel attributes, that is, Zin, Z(0) and Z(1), are supplied to the selector portion 104, and the farthest Z value among Zin, Z(0) and Z(1) is outputted. In this situation, the near selector portion 103 controls the select operation of the selector portion 104 in such a manner that one Z value having the larger number of regions (count value) between the two approximate Z values is outputted as the representative Z value. The representative Z value which is outputted from the selector portion 104 and the Z value which is outputted from the selector portion 102 as the farthest Z value among Zin, Z(0) and Z(1) are allotted to the element regions (0) and (1), respectively and then registered therein.

The selector portion 98 selects the input data on the basis of the select control signal BS from the near pair selector portion 101, and the number of kinds of the pixel attributes and the count value which are supplied from the verification portion 97, to thereby determine which of the element regions (0) and (1) the subpixel rendering region which has been subjected to the hidden surface removal corresponds to, and outputs signals representative of the number of subpixel rendering regions which has been subjected to the hidden surface removal and the number of kinds of the pixel attributes which are determined in each of the element regions (0) and (1) of the LUT to a rate determination portion 100, and also outputs the above input data per se to the logical OR operation portion 99.

The logical OR operation portion 99 implements the logical OR operation of the data which is supplied from the selector portion 98, and outputs data of the operation result as a new Mbuf.

The rate determination portion 100 generates a composite ratio control signal BR representative of the composite ratio in generating the composite color value by the color composite block 77 on the basis of the number of kinds of the pixel attributes which are supplied from the selector portion 98 and the number of subpixel rendering regions which has been subjected to the hidden surface removal, and then supplies the composite ratio control signal BR to a color composite block 77.

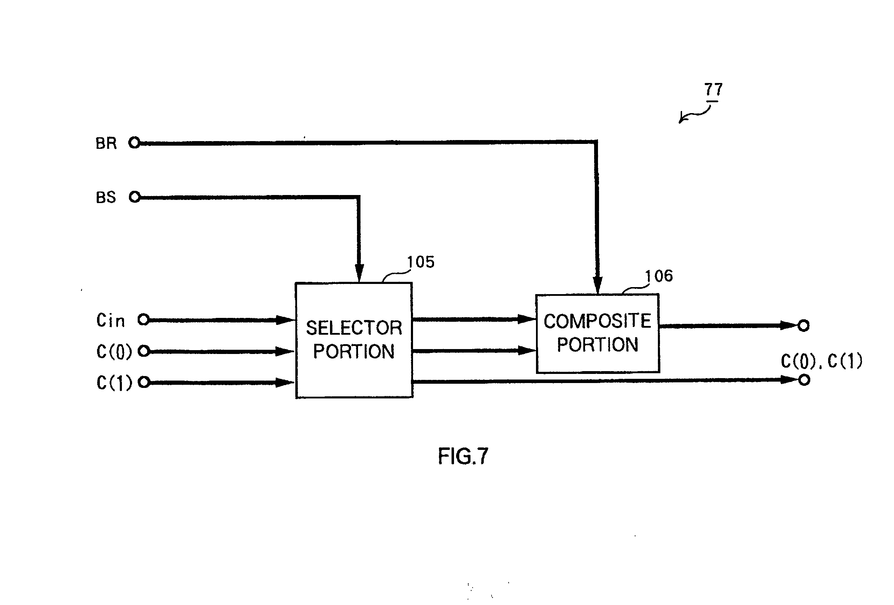

Fig. 7 is a structural diagram showing the details of the color composite block 77. In Fig. 7, a selector portion 105 selects a color value corresponding to the select control signal BS from Cin which is transmitted from the color composite unit 65 and C(0), C(1) that are read from the color buffer 69.

When there is one kind of color value, the selector portion 105 outputs the color value to a composite portion 106, and the composite portion 106 supplies the color value to a color buffer 69(1) which is the element region (1) of the LUT as it is. When there are two kinds of color values, the selector portion 105 outputs one of two kinds of color values to the composite portion 106. The composite portion 106 registers the color value in the color buffer 69(1) which is associated with, for example, the element region (1) of the LUT, and registers the other color value in a color buffer 69(0) which is associated with the element region (0) of the LUT on the basis of the composite ratio control signal BR.

When there are three kinds of color values, the selector portion 105 selects the color values corresponding to two Z values, which are selected as the approximate values from three kinds of Z values by the near pair selector portion 101, from Cin, C(0) and C(1), and then supplies the selected color values to the composite portion 106. The composite portion 106 integrates those two kinds of color values into one composite color value on the basis of the composite ratio control signal BR and registers the composite color value in the color buffer 69(1) which is associated with the element region (1) of the LUT. The remaining color value among those three color values are registered in the color buffer 69(0) which is associated with the element region (0) of the LUT.

(The Operation Example of Rendering Processing Device)

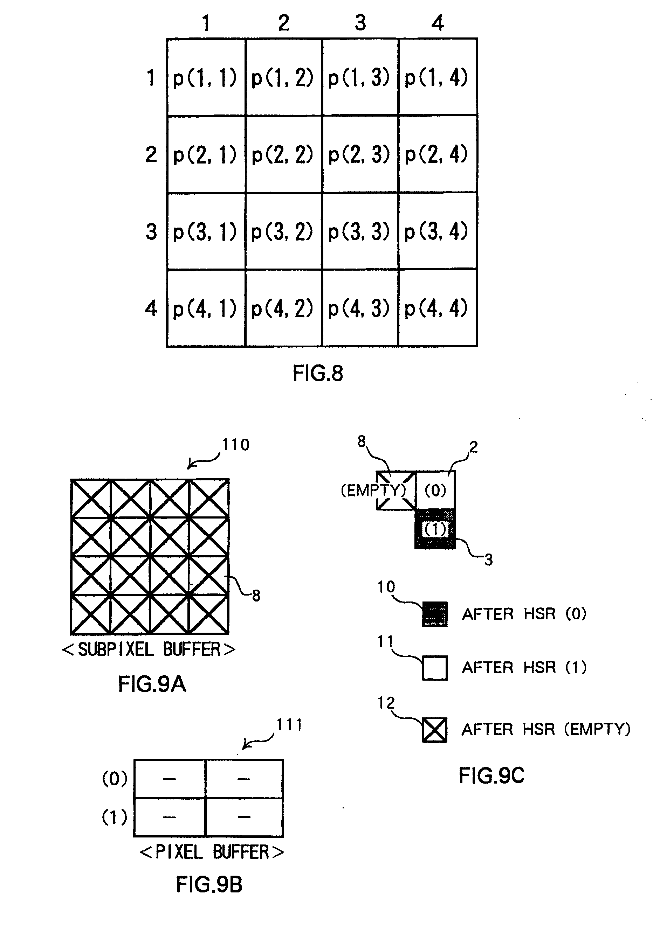

Subsequently, the specific operation example of the rendering processing device structured as described above will be described with reference to Fig. 8 to 15. In this example, for simplification of description, a case in which the subpixel buffer 68 is 1 bit x 16 words in depth and the number of element regions of the LUT is two is exemplified as shown in Figs. 1A to 1D. In the following description, it is assumed that 16 subpixel rendering regions of a subpixel buffer for each of the pixels are specified by addresses of p(1,1) to p(4,4), respectively, as shown in Fig. 8.

Fig. 9A is a diagram showing a subpixel buffer 110 in an initial state where all of the respective subpixel rendering regions for one pixel are empty regions, Fig. 9B is a diagram showing an LUT 111 in an initial state where both of the element region (0) and the element region (1) are empty regions, and Fig. 9C is a diagram showing a state of the subpixel rendering regions. It is assumed that reference numerals which are added to the respective subpixel rendering regions of the subpixel buffer 110 as shown in Figs. 9A and 9C have the following meanings.

10: a region in which a subpixel corresponding to the element region (0) of the LUT is rendered after the hidden surface removal (HSR);

11: a region in which a subpixel corresponding to the element region (1) of the LUT is rendered after the hidden surface removal (HSR);

12: an empty region after the hidden surface removal (HSR);

13: a subpixel rendering region a bit value of which becomes "1";

14: a subpixel rendering region a bit value of which becomes "0";

15: a subpixel rendering region a bit value of which becomes "1" after the hidden surface removal;

16: a subpixel rendering region a bit value of which becomes "0" after the hidden surface removal;

2: a region in which "0" is stored as a bit value corresponding to the element region (0) of the LUT after the color composition;

3: a region in which "1" is stored as a bit value corresponding to the element region (1) of the LUT after the color composition; and

8: an empty region which is in a disable state (a reference numeral for distinguishing from a region 2 in which "0" is stored in an enable state).

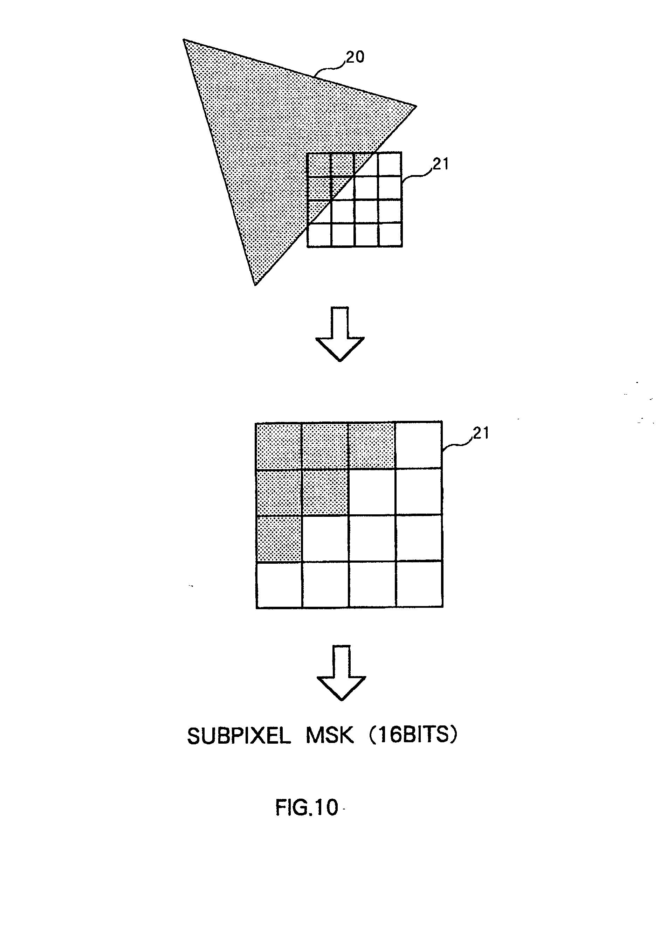

It is assumed that in the initial state shown in Figs. 9A and 9B, a subpixel mask 21 of 16 bits shown in the middle portion of Fig. 10 is entered from a pixel including an edge of a polygon 20 shown in an upper portion of Fig. 10. The Z value of a region of the subpixel mask 21 in which the subpixels are rendered, that is, a portion of the subpixel mask 21 which overlaps with the polygon 20 is Z0, and the color value is C0.

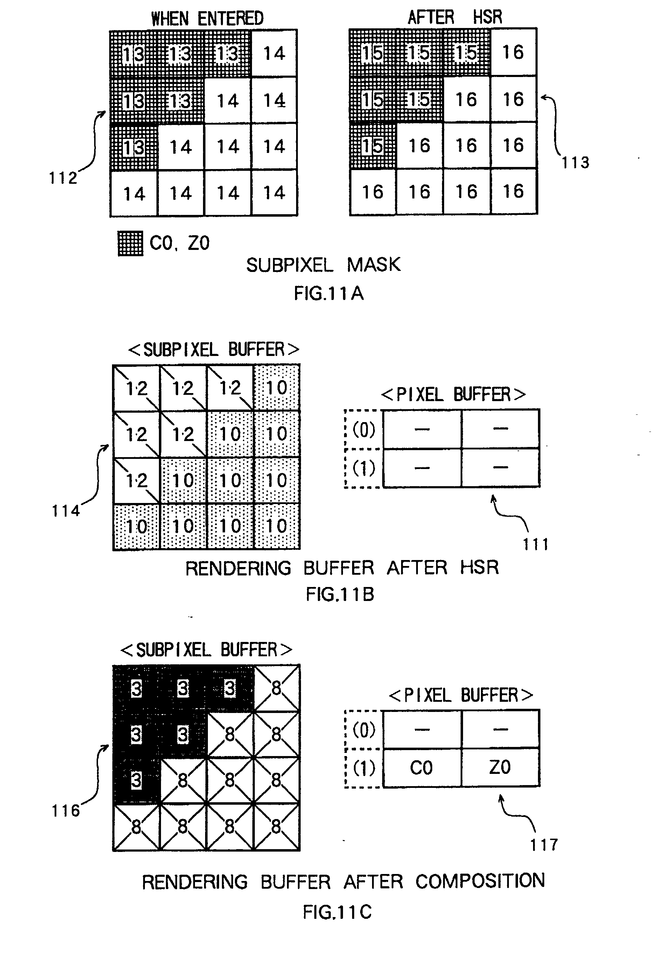

In the subpixel mask 21 which is newly entered, p(1,1) to p(1,3), p(2,1), p(2,2) and P(3,1) of the regions 13 in the interior of the polygon 20 are "1", and p(1,4), p(2,3), P(2,4), p(3,2), p(3,3), p(3,4) and p(4,1) to p(4,4) of the other regions 14 are "0", as shown in a left portion of Fig. 11A. In this situation, the subpixel mask 21 becomes "0 x 0137" if it is represented by sexadecimal number.

In this case, Z0 and C0 are supplied to the hidden surface removal block 75 as Zin and Cin, respectively. However, because there is no subpixels which have been rendered in advance, a subpixel mask 113 which has been subjected to HSR in the same bit pattern as that of the entered subpixel mask 112 is outputted from the hidden surface removal block 75 as shown in a right portion of Fig. 11A.

Also, the mask composite/Z select block 76 overwrites a subpixel mask 114 having the same bit pattern as that of the subpixel mask 113 on the subpixel buffer 68 as shown in a left portion of Fig. 11B. As a result, in a subpixel rendering region 116 of the subpixel buffer 68, p(1,1) to p(1,3), p(2,1), p(2,2) and P(3,1) of the regions 3 become "1", and p(1,4), p(2,3), P(2,4), p(3,2), p(3,3), p(3,4) and p(4,1) to p(4,4) of the other regions 8 become empty regions, as shown in a left portion of Fig. 11C.

The mask composite/Z select block 76 and the color composite block 77 register C0 and Z0 as data corresponding to the regions 3 of the subpixel rendering region 116 in the element region (1) of the LUT 117 as shown in a right portion of Fig. 11C.

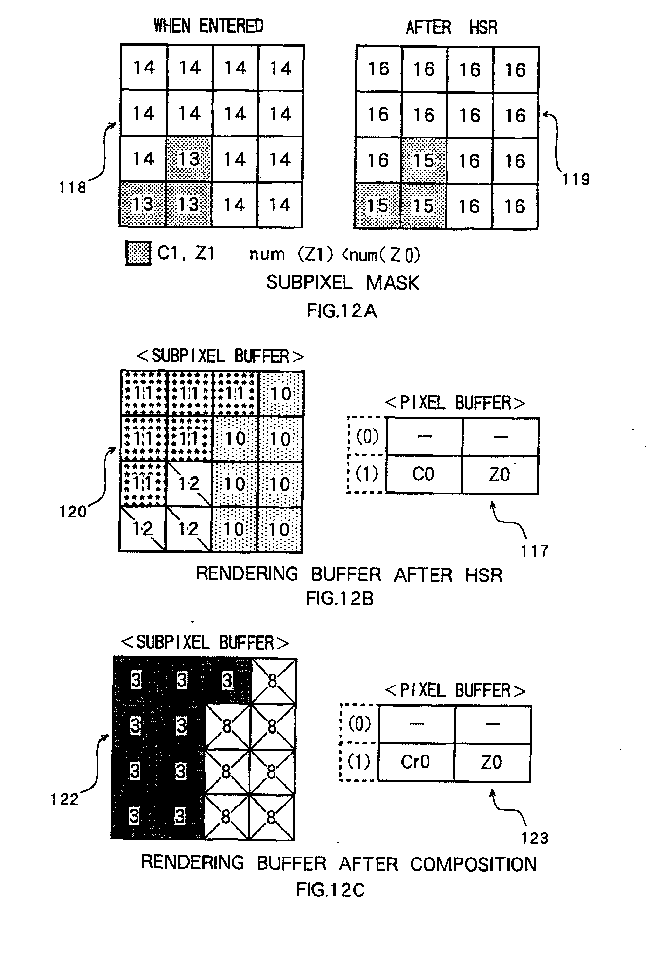

Subsequently, when the subpixel rendering region 116 and the LUT 117 are in a state shown in Fig. 11C, it is assumed that a subpixel mask 118 in which p(1,1) to p(1,4), p(2,1) to p(2,4), p(3,1) p(3,3), p(3,4), p(4,3) and p(4,4) of the regions 14 become "0", and the bit values of p(3,2), p(4,1) and p(4,2) become "1" are newly entered, as shown in a left portion of Fig. 12A. It is assumed that the Z value and the color value which correspond to the regions 13 of the entered subpixel mask 118 are Z1 and C1, respectively, and the number of subpixels of Z1 is smaller than the number of subpixels of Z0.

When such a subpixel mask 118 is entered, Z1 is supplied to the comparator portion 81 of the hidden surface removal block 75, and Z1 and Z0 which is read from the element region (1) of the LUT 117 are supplied to the comparator portion 82. However, since the element region (0) of the LUT 117 is still the empty region, and the bit pattern of the region 13("1") in the new subpixel mask 118 does not overlap with the bit pattern in which the previous subpixel rendering region 116 is "1", a subpixel mask 119 which has been subjected to the hidden surface removal (HSR) is outputted in the same bit pattern as that of the subpixel mask 118 from the hidden surface removal block 75 as shown in a right portion of Fig. 12A.

The mask composite/Z select block 76 integrates the region 11 and region 12 since the region 10 corresponding to an element region (0) which is empty area remains in the subpixel buffer, and treats p(1,1) to p(1,3 p(2,1), p(2,2), p(3,1), p(3,2), p(4,1 and p(4,2) of the regions 11 and 12 as the subpixel rendering region in which the subpixels having the subpixel attributes of C0 and Z0 which are registered in the element region (1) are rendered, as shown in a left portion of Fig. 12B. On the other hand, although p(1,4), p(2,3), p(2,4), p(3,3), p(3,4), p(4,3) and p(4,4) of the regions 10 become values that have been registered in the element region (0) of the LUT which has been subjected to the hidden surface removal, since the element region (0) is the empty region, rendering is not implemented in those regions 10.

As a result, in a subpixel rendering region 122 of the subpixel buffer 68, "1" is rendered in the regions 3 of p(1,1) to p(1,3), p(2,1) p(2,2), p(3,1) p(3,2), p(4,1) and p(4,2), and the remaining regions 8 of p(1,4), p(2,3), p(2,4), p(3,3), p(3,4), p(4,3) and p(4,4) become the empty regions as shown in a left portion of Fig. 12C.

The color composite block 77 integrates C0 and C1 into one composite color value Cr0. In other words, a value resulting from multiplying C0 by 6 in correspondence with the number of rendering regions "6" of Z0 which has been subjected to the hidden surface removal and a value resulting from multiplying C1 by 3 in correspondence with the number of rendering regions "3" of Z1 which has been subjected to the hidden surface removal are added together and then averaged by the number of regions, to thereby calculate Cr0, as indicated by the following expression.

$$Cr0 = (C0 \times 6 + V1 \times 3)/9$$

In this situation, because the representative Z value of Z0 is larger in the number of regions than Z1, Z0 is selected. As a result, in the LUT 123, Cr0 and Z0 which correspond to the regions 3 of the subpixel buffer 122 are stored in the element region (1), as shown in a right portion of Fig. 12C. The element region (0) of the LUT 123 is still the empty region.

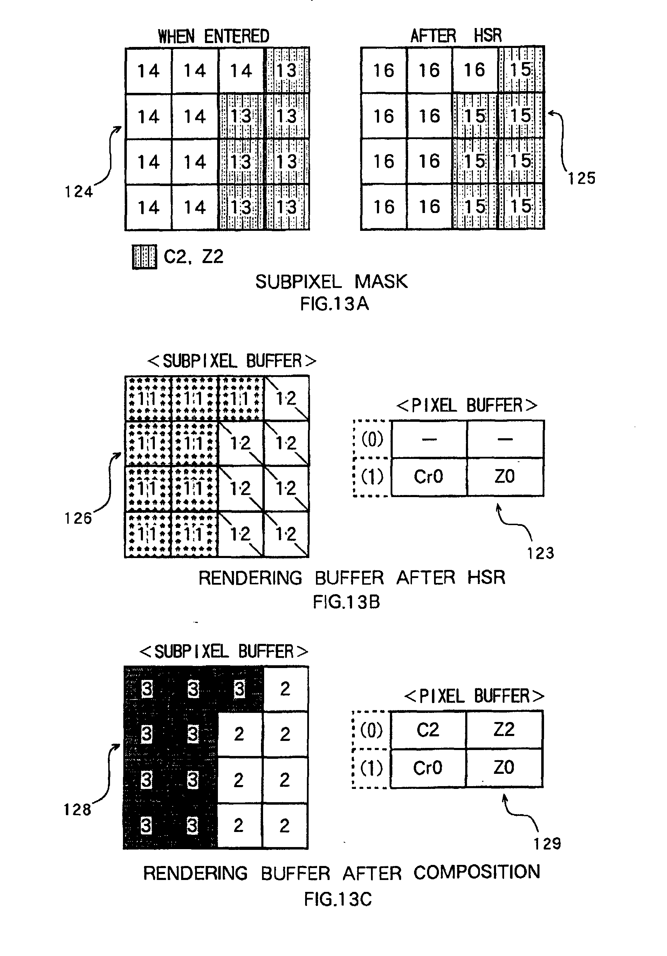

Then, it is assumed that when the subpixel rendering region 122 and an LUT 123 are in a state shown in Fig. 12C, it is assumed that a subpixel mask 124 in which p(1,4), p(2,3), p(2,4), p(3,3), p(3,4), p(4,3) and p(4,4) of the regions 13 become "1", and p(1,1) to p(1,3), p(2,1), p(2,2), p(3,1), p(3,2), p(4,1) and p(4,2) of the regions 14 become "0" is newly entered as shown in a left portion of Fig. 13A. It is assumed that the Z value corresponding to the region 13 is Z2, and the color value thereof is C2.

When such a subpixel mask 124 is entered, Z2 is supplied to the comparator portion 81 of the hidden surface removal block 75 as Zin, and Z2 and Z0 which is read from the element region (1) of the LUT 123 are supplied to the comparator portion 82. However, since the element region (0) of the LUT 123 is still the empty region at this time, a subpixel mask 125 which has been subjected to the hidden surface removal (HSR) is outputted in the same bit pattern as that of the subpixel mask 124 to the mask composite/Z select block 76 from the hidden surface removal block 75 as shown in a right portion of Fig. 13A.

In the mask composite/Z select block 76, as shown in a left portion of Fig. 13B, p(1,1) to p(1,3), p(2,1), p(2,2), p(3,1) p(3,2), p(4,1) and p(4,2) of the regions 11 in a subpixel rendering region 126 of the subpixel buffer 68 become the rendering regions of the subpixels having the pixel attributes which correspond to the element region (1) of the LUT, and p(1,4), p(2,3), p(2,4), p(3,3), p(3,4), p(4,3) and p(4,4) of the regions 12 become the rendering regions of the subpixels having the pixel attributes which correspond to the element region (0) of the LUT.

The mask composite/Z select block 76 outputs data which is made up of "1" of p(1,1) to p(1,3), p(2,1) p(2,2), p(3,1) p(3,2), p(4,1 and p(4,2) corresponding to Z0, and "0" of p(1,4), p(2,3), p(2,4), p(3,3), p(3,4), p(4,3) and p(4,4) corresponding to Z1 as the subpixel mask (Mbuf) which is overwritten on the subpixel buffer 68. As a result, in the subpixel buffer 68, as in a subpixel rendering region 128 shown in a left portion of Fig. 13C, "1" is rendered in p(1,1) to p(1,3), p(2,1), p(2,2), p(3,1) p(3,2), p(4,1) and p(4,2) of the regions 3, respectively and "0" is rendered in p(1,4), p(2,3), p(2,4), p(3,3), p(3,4), p(4,3) and p(4,4) of the remaining regions 2, respectively.

The color composite block 77 transmits C2 that is a color value which is newly entered to the color buffer 69 (0). As a result, as shown in a right portion of Fig. 13C, in an LUT 129 which has been subjected to color composition, Cro which is a composite color value corresponding to the respective rendering regions 3 of the subpixel buffer 128 and Z0 which is a representative Z value at this time are stored in the element region (1). On the other hand, C2 which is a color value corresponding to the regions 2 of the subpixel buffer 128 and Z2 which is a representative Z value at this time are registered in the element region (0).

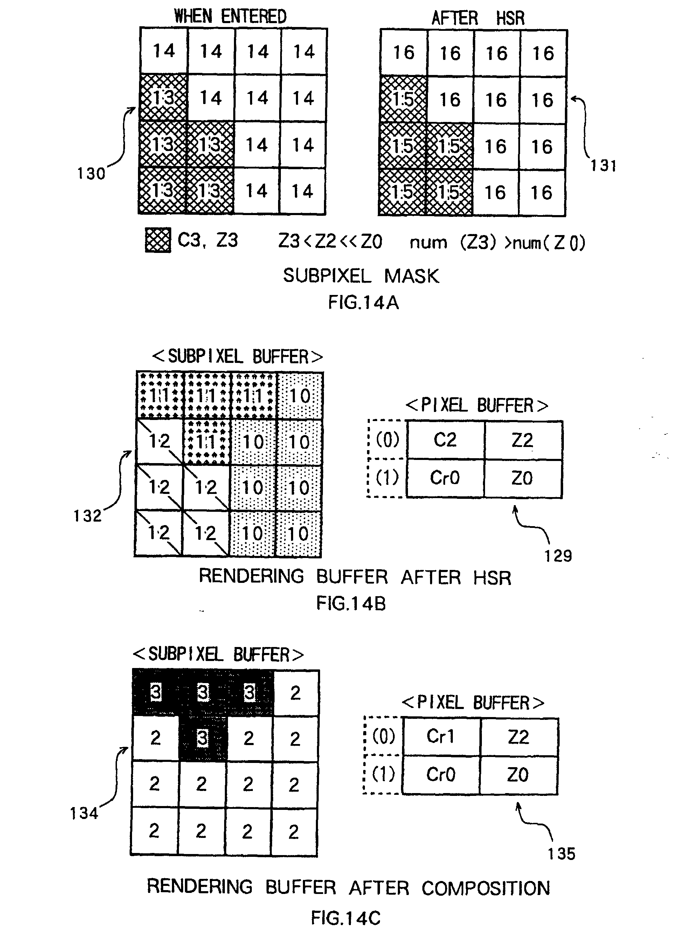

Subsequently, when the subpixel rendering region 128 and an LUT 129 are in a state shown in Fig. 13C, it is assumed that a subpixel mask 130 in which p(2,1), p(3,1) p(3,2), p(4,1), and p(4,2) of the regions 13 become "1", and p(1,1) to p(1,4), p(2,2) to p(2,4), p(3,3), p(3,4), p(4,3) and p(4,4) of the regions 14 become "0" is newly entered as shown in a left portion of Fig. 14A. When the subpixels to be rendered thus overlap with the previous subpixels, it is necessary to take an influence of alias into consideration. From this viewpoint, the operation in this case will be described in more detail.

It is assumed that the Z value and the color value which correspond to the regions 13 in Fig. 14A are Z3 and C3, respectively, and a relationship of Z3, and Z0, Z2 which are stored in the LUT satisfies Z3 < Z2 << Z0.

When the subpixel mask 130 is entered, Z3 which corresponds to the regions 13 and Z2 which is read from the element region (0) of the LUT 123 are supplied to the comparator portion 81 of the hidden surface removal block 75. Because Z3 < Z2 is satisfied, and Z3 has a nearer value from a virtual point of sight than Z2, a select control signal of "1" is outputted from the comparator portion 81. Also, Z3 and Z0 which is read from the element region (1) of the LUT 123 are supplied to the comparator portion 82. Because Z3 << Z0 is satisfied, and Z3 has a nearer value from a virtual point of sight than Z0, a select control signal of "1" is also outputted from the comparator portion 81. Therefore, a subpixel mask 131 having the same pit pattern as that of the subpixel mask 130 which has been subjected to hidden surface removal is supplied to the mask composite/Z select block 76 from the hidden surface removal block 75.

In the mask composite/Z select block 76, among the bit count portions 94 to 96, the bit count portion 94 counts seven "1" which corresponds to p(1,4), p(2,3), p(2,4), p(3,3), p(3,4), p(4,3) and p(4,4), the bit count portion 95 counts four "1" which corresponds to p(1,1) to p(1,3) and p(2,2), and the bit count portion 96 counts five "1" which corresponds to p(2,1), p(3,1 p(3,2), p(4,1) and p(4,2). The verification portion 97 judges that the kinds of pixel attributes are "3" on the basis of the count values which are supplied from the bit count portions 94 to 96, and supplies data representative of the judgment result and a signal of the count value corresponding to the judgment result to the near pair selector portion 101 and the near selector portion 103.

The near pair selector portion 101 is inputted with Z0 and Z2 which are read from the element regions (0) and (1) of the LUT 129, and selects Z3 and Z2 as the most approximate two Z values among those three Z values. Then, the near pair selector portion 101 sends those Z values Z3 and Z2 to the selector portion 104 and the near selector portion 103, and registers (overwrites) Z0 which is the remaining farthest Z value in the element region (1) of the LUT. The near selector portion 103 controls the select operation of the selector portion 104 so as to select Z2 the number of regions of which is larger between Z3 and Z2. The Z2 is registered (overwritten) in the element region (0) of the LUT.

The selector portion 98 sets data of the portions of p(1,1) to p(1,3) and p(2,2) corresponding to Z0, which is not selected by the near pair selector portion 101, to "1" in correspondence with the element region (1). And the regions of p(2,1), p(3, p(3,2), p(4,1) and p(4,2) corresponding to Z3 which is selected by the near pair selector portion 101, are set to "0" in correspondence with the element region (0) of the LUT. Further, the selector portion 98 also sets the values of the remaining rendering regions of p(1,4), p(2,3), p(2,4), p(3,3), p(3,4), p(4,3) and p(4,4) corresponding to Z2, which is selected by the near pair selector portion 103, to "0" in correspondence with the element region (0) of the LUT. As a result, as shown in a left portion of Fig. 14B, p(1,1) to p(1,3) and p(2,) of the regions 11 of a subpixel buffer 132 are treated as the subpixels having the pixel attribute which corresponds to the element region (1) of the LUT. On the other hand, p(2,1), p(3,1) p(3,2), p(4,1 and p(4,2) of the regions 12 become regions corresponding to Z3 which have been subjected to the hidden surface removal, and p(1,4), p(2,3), p(2,4), p(3,3), p(3,4), p(4,3) and p(4,4) of the regions 10 become regions corresponding to Z2 which have been subjected to the hidden surface removal, and those regions are treated as the subpixels having the pixel attributes which correspond to the element region (0) of the LUT, respectively.

The subpixel mask (Mbuf) in which the regions corresponding to Z2 and Z3 are "0", and the remaining regions are "1" is outputted from the logical OR operation portion 99. In other words, the subpixel buffer 68 at this time becomes in a state in which "1" is rendered in the regions 3 of p(1,1) to p(1,3) and p(2,2), and "0" is rendered in the remaining regions 2 of p(1,4 p(2,1), p(2,3), p(2,4), p(3,1) to p(3,4) and p(4,1) to p(4,4), as in a subpixel rendering region 134 shown in a left portion of Fig. 14C.

The color composite block 77 transmits C2 and C3 which are color values corresponding to Z2 and Z3 to the composite portion 106 and outputs the composite color value Cro which is a color value corresponding to Z0 as it is, on the basis of the select control signal BS which is outputted from the near pair selector portion 101. The composite portion 106 obtains Cr1 which is a new composite color value through an arithmetic operation expression that adds a value resulting from multiplying C2 by 7 in correspondence with the count value "7" and a value resulting from multiplying C3 by 5 in correspondence with the count value "5" and averages the added value, as represented by the following expression.

$$Cr1 = (C2 \times 7 + C3 \times 5)/12$$

In an LUT 135 that has been subjected to the color composition, as shown in a right portion of Fig. 14C, Cr0 and Z0 which correspond to the respective rendering regions 3 of the subpixel buffer 134 are registered in the element region (1) whereas Cr1 and Z2 which correspond to the regions 2 of the subpixel buffer 134 are registered in the element region (0).

Subsequently, when the subpixel rendering region 134 and an LUT 135 are in a state shown in Fig. 14C, it is assumed that a subpixel mask 136 in which p(1,2), p(1,3), p(2,2), p(2,3), p(3,2), p(3,3), p(4,2) and p(4,3) of the regions 13 become "0", and p(1,1), p(2,1), p(3,1) p(4,1), p(1,4), p(2,4), p(3,4) and p(4,4) of the regions 14 become "1" is newly entered, as shown in a left portion of Fig. 15A. It is assumed that the Z value and the color value which correspond to the regions 13 are Z4 and C4, respectively. Also, it is assumed that a relationship of Z4 and Z0, Z2 satisfies Z2 << Z4 < Z0, and the number of subpixels of Z4 is larger than the number of subpixels of Z0.

When such a subpixel mask 136 is entered, Z4 which corresponds to the regions 13 and Z2 which is read from the element region (0) of the LUT 135 are supplied to the comparator portion 82 of the hidden surface removal block 75. A relationship of Z2 « Z4 is satisfied, and Z2 has a value nearer to the point of sight than Z4. Also, Z2 and Z0 which is read from the element region (1) of the LUT 135 are supplied to the comparator portion 81, a relationship of Z4 < Z0 is satisfied, and Z4 has a value nearer to the point of sight than Z0. For that reason, as shown in a right portion of Fig. 15A, a subpixel mask in which p(1,2), p(1,3), and p(2,2) of the regions 15 become "1", and p(1,1), p(2,1), p(3,1) p(4,1), p(2,3), p(3,2), p(3,3), p(4,2) and p(4,3), p(1,4), p(2,4), p(3,4) and p(4,4) of the regions 16 become "0" is supplied to the mask composite/Z select block 76 from the hidden surface removal block 75 as a subpixel mask 137 which has been subjected to the hidden surface removal.

In the mask composite/Z select block 76, data each including "1" is supplied to the bit count portions 94 to 96. In other words, the bit count portion 94 counts twelve bits "1" which correspond to p(2,1), p(3,1), p(4,1), p(1,4), p(2,3), p(2,4), p(3,2), p(3,3), p(3,4), p(4,2), p(4,3) and p(4,4), the bit count portion 95 counts one bit "1" which corresponds to p(1,1), and the bit count portion 96 counts three bits "1" of p(1,2), p(1,3), p(2,2).

The verification portion 97 judges that the kinds of pixel attributes which are allotted to one pixel is "3" on the basis of the count values which are supplied from the bit count portions 94 to 96, and supplies data representative of the judgment result and a signal of the count value corresponding to the judgment result to the near pair selector portion 101 and the near selector portion 103.

To the near pair selector portion 101 and the selector portion 102 are inputted Z0 and Z2 which are read from the element regions (0) and (1) of the LUT 135. The near pair selector portion 101 sends two approximate Z0 and Z4 among those three kinds of Z values to the selector portion 104 and the near selector portion 103, and supplies a select control signal for registering Z0 which is the remaining farthest Z value in the element region (0) of the Z buffer to the selector portion 102.

The near selector portion 103 controls the select operation of the selector portion 104 so as to select Z4 which is given to the larger number of regions from Z0 and Z4 which are transmitted from the selector portion 102. The Z4 which is outputted from the selector portion 104 is registered (overwritten) in the element region (1) of the LUT.

The selector portion 98 separates the regions corresponding to Z0 and Z4 which are selected as the approximate values by the near pair selector portion 101, respectively, and the other regions corresponding to Z2 from each other on the basis of the select control signal BS from the near pair selector portion 101, the number of kinds of data and the count value from the verification portion 97. The selector portion 98 then sets the regions of Z0 and Z4 to "1" in correspondence with the element region (1) of the LUT, sets the regions of Z2 to "0" in correspondence with the element region (0) of the LUT, and outputs those data to the logical OR operation portion 99. The selector portion 98 also outputs the value of the number of rendering regions which have been subjected to the hidden surface removal to the rate determination portion 100 together with "3" which is the kind of data.

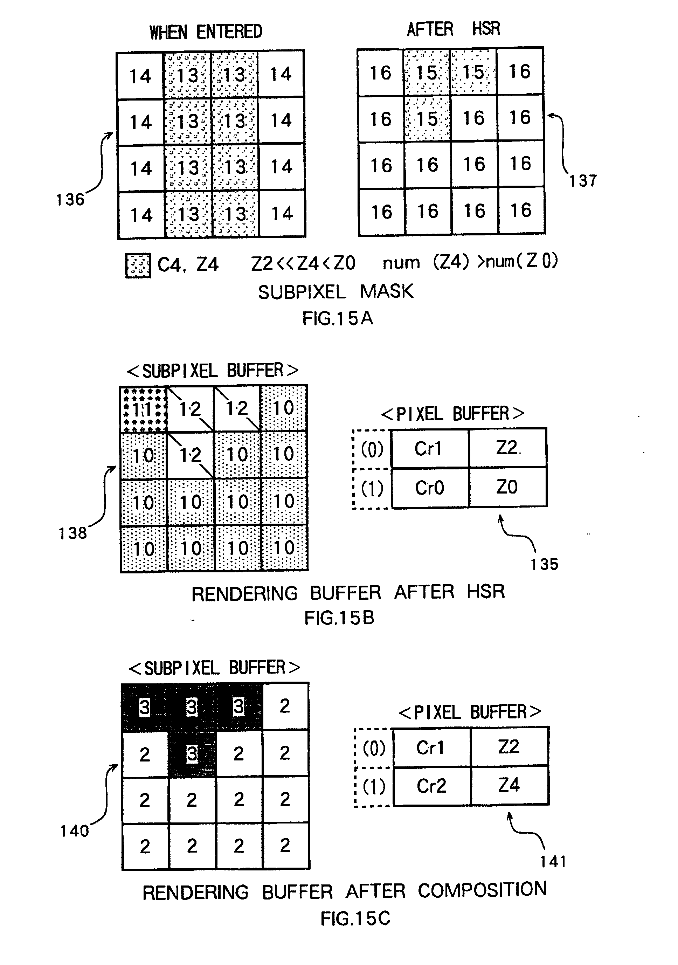

In this situation, as shown in a left portion of Fig. 15B, p(1,1) of the regions 11 in the subpixel rendering region 138 corresponds to Z0 which has been subjected to the hidden surface removal, p(1,2), p(1,3) and p(2,2) of the regions 12 correspond to Z4 which has been subjected to the hidden surface removal, and those regions 11 and 12 become the subpixel rendering regions having the pixel attribute which corresponds to the element region (1) of the LUT.

Also, p(1,4 p(2,1) p(2,3), p(2,4), p(3,1) to p(3,4) and p(4,1) to p(4,4) of the regions 10 in the subpixel rendering regions 138 become the pixel attributes corresponding to the element region (0) of the LUT in correspondence with Z2 which has been subjected to the hidden surface removal.

Data in which the regions that correspond to Z0 and Z4 are "1", and the remaining regions are "0" is outputted as Mbuf from the mask composite/Z select block 76.

In this situation, a subpixel mask in which p(1,1), p(1,2), p(1,3) and p(2,2) of the regions 3 are "1", and p(1,4 p(2,1), p(2,3), p(2,4), p(3,1) to p(3,4) and p(4,1 to p(4,4) of the remaining regions 2 are "0" is overwritten in the subpixel rendering region as in a subpixel rendering region 140 shown in a left portion of Fig. 15C.

The color composite block 77 sends Cr0 and C4 which are the color values corresponding to Z0 and Z4 to the composite portion 106, and outputs the composite color value Cr1 which is the color value corresponding to Z2 as it is, on the basis of the select control signal BS from the mask composite/Z select block 76. In this situation, the composite portion 106 obtains Cr2 which is a new composite color value through an arithmetic operation expression that adds a value resulting from multiplying Cr0 by 1 in correspondence with the number of regions "1" of Z0 which has been subjected to the hidden surface removal and a value resulting from likewise multiplying C4 by 3 in correspondence with the number of regions "3" of Z4 which has been subjected to the hidden surface removal and averages the added value, as represented by the following expression.

$$Cr2 = (Cr0 \times 1 + C4 \times 3)/4$$

In an LUT 141 that has been subjected to the color composition, as shown in a right portion of Fig. 15C, Cr2 and Z4 which correspond to the respective rendering regions 3 of the subpixel buffer 140 are registered in the element region (1), respectively, whereas Cr1 and Z2 which correspond to the regions 2 of the subpixel buffer 140 are registered in the element region (0), respectively.

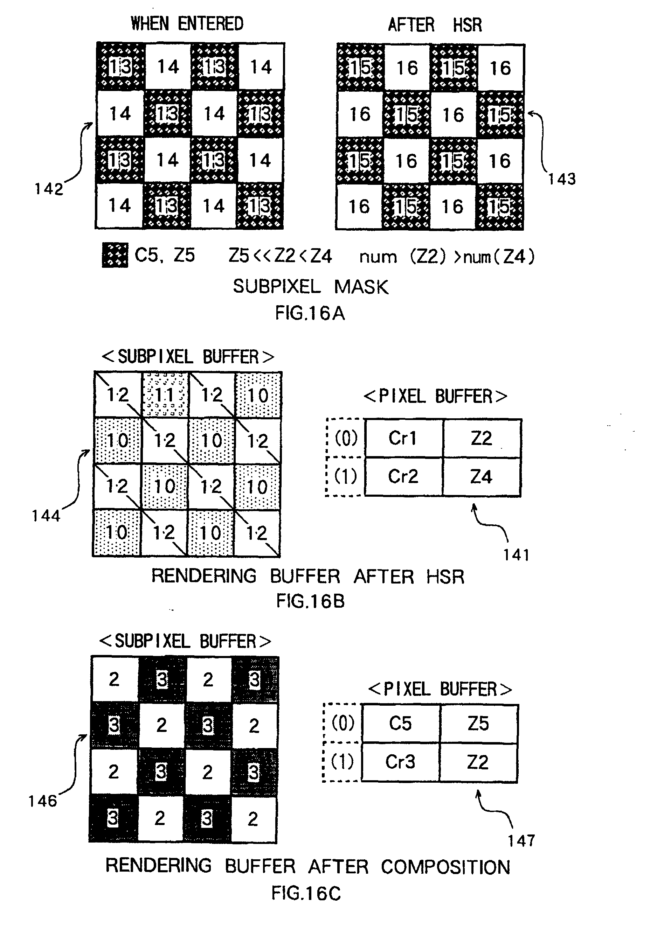

Subsequently, when the subpixel rendering region 140 and the LUT 141 are in a state shown in Fig. 15C, it is assumed that a subpixel mask 142 in which p(1,1), p(1,3), p(2,2), p(2,4), p(3,1), p(3,3), p(4,2) and p(4,4) of the regions 13 become "1", and p(1,2), p(1,4), p(2,1) p(2,3), p(3,2), p(3,4), p(4,1) and p(4,3) of the regions 14 become "0" is entered, as shown in a left portion of Fig. 16A. It is assumed that the Z value and the color value which correspond to the regions 13 are Z5 and C5, respectively. Also, Z5 << Z2 < Z4 is satisfied.

When such a subpixel mask 142 is entered, Z5 which corresponds to the regions 13 of the subpixel mask 142 and Z2 which is read from the element region (0) of the LUT 141 are supplied to the comparator portion 82 of the hidden surface removal block 75. A relationship of Z5 << Z2 is satisfied, and Z5 has a value nearer to the point of sight than Z2. Also, Z5 and Z4 which is read from the element region (1) of the LUT 141 are supplied to the comparator portion 81. A relationship of Z5 < Z4 is satisfied, and Z5 has a value nearer to the point of sight than Z4. For that reason, as shown in a right portion of Fig. 16A, a subpixel mask 143 having the same bit pattern as that of the subpixel mask 142 which has been subjected to the hidden surface removal is outputted from the hidden surface removal block 75.

In the mask composite/Z select block 76, data each including "1" is supplied to the bit count portions 94 to 96. In other words, the bit count portion 94 counts seven "1" which corresponds to p(1,4), p(2,1), p(2,3), p(3,2), p(3,4), p(4,1) and p(4,3), the bit count portion 95 counts one "1" which corresponds to p(1,2), and the bit count portion 96 counts eight bits "1" which corresponds to p(1,1), p(1,3), p(2,2), p(2,4), p(3,1), p(3,3), p(4,2) and p(4,4). The verification portion 97 judges that the kinds of pixel attributes which are allotted to one pixel is "3" on the basis of the count values which are supplied from the bit count portions 94 to 96, and supplies data representative of the judgment result and a signal of the count value corresponding to the judgment result to the near pair selector portion 101 and the near selector portion 103.

The near pair selector portion 101 and the selector portion 102 are supplied with the Z values Z2 and Z4 which are read from the element regions (0) and (1) of the LUT 141. The near pair selector portion 101 sends two approximate Z values Z2 and Z4 among those three kinds of Z values Z5, Z2 and Z4 to the selector portion 104 and the near selector portion 103, and supplies a select control signal for supplying the remaining farthest Z value Z5 to the element region (0) of the LUT to the selector portion 102. The near selector portion 103 controls the select operation of the selector portion 104 so as to select Z4 the number of regions of which is relatively larger from Z2 and Z4 which are transmitted from the selector portion 102. The Z2 which is outputted from the selector portion 104 is registered (overwritten) in the element region (1) of the LUT.

The selector portion 98 separates the regions corresponding to Z2 and Z4 which are selected as the approximate Z values by the near pair selector portion 101, respectively, and the rendering regions corresponding to Z5 from each other on the basis of the select control signal BS, the number of the kinds of pixel attributes "3" and the count value from the verification portion 97. The selector portion 98 then sets the regions of Z2 and Z4 to "1" in correspondence with the element region (1) of the LUT, and sets the regions of Z5 to "0" in correspondence with the element region (0) of the LUT.

That is, in this situation, as shown in a left portion of Fig. 16B, p(1,2 of the regions 11 in the subpixel mask 144 becomes a region corresponding to Z4 which has been subjected to the hidden surface removal, p(1,4), p(2,1), p(2,3), p(3,2), p(3,4), p(4,1) and p(4,3) of the regions 10 become regions corresponding to Z2 which has been subjected to the hidden surface removal, and p(1,2), p(1,4), p(2,1), p(2,3), p(3,2), p(3,4), p(4,1) and p(4,3) of those regions 11 and 12 become regions corresponding to the element region (1) of the LUT. Also, p(1,1), p(1,3), p(2,2), p(2,4), p(3,1), p(3,3), p(4,2) and p(4,4) of the regions 12 become regions (empty regions in which new pixels can be written) corresponding to Z5 which has been subjected to the hidden surface removal, and those regions 12 are regions corresponding to the element region (0) of the LUT.

A subpixel mask (Mbuf) in which the regions that correspond to Z2 and Z4 are "1", and the remaining regions are "0" is outputted from the logical OR operation portion 99. In other words, at this time, in the subpixel buffer 68, "1" is rendered in p(1,2), p(1,4), p(2,1), p(2,3), p(3,2), p(3,4), p(4,1) and p(4,3) of the regions 3, and "0" is stored in p(1,1), p(1,3), p(2,2), p(2,4), p(3,1), p(3,3), p(4,2) and p(4,4) of the remaining regions 2, as in the subpixel buffer 146 shown in a left portion of Fig. 16C.

The color composite block 77 sends Cr1 and Cr2 which are the color values corresponding to Z2 and Z4 to the composite portion 106, and outputs the color value C5 which corresponds to Z5 as it is, on the basis of the select control signal BS. The composite portion 106 obtains Cr3 which is a new composite color value through an arithmetic operation expression that adds a value resulting from multiplying Cr1 by 7 in correspondence with the number of regions "7" of Z2 which has been subjected to the hidden surface removal and a value resulting from multiplying Cr2 by 1 in correspondence with the number of rendering regions "1" of Z4 which has been subjected to the hidden surface removal and averages the added value, as represented by the following expression.

$$Cr3 = (Cr1 \times 7 + Cr2 \times 1)/8$$

With the above operation, as shown in a left portion of Fig. 16C, in the subpixel buffer 146, "1" is rendered in p(1,2), p(1,4), p(2,1), p(2,3), p(3,2), p(3,4), p(4,1) and p(4,3) of the regions 3, and "0" is stored in p(1,1), p(1,3), p(2,2), p(2,4), p(3,1), p(3,3), p(4,2) and p(4,4) of the regions 2. Also, in an LUT 147 that has been subjected to the color composition, as shown in a right portion of Fig. 16C, the values of Cr3 and Z2 which correspond to the regions 3 of the subpixel buffer 146 are registered in the element region (1), respectively, whereas C5 and Z5 which correspond to the regions 2 of the subpixel buffer 146 are registered in the element region (0), respectively.

(Other Examples)

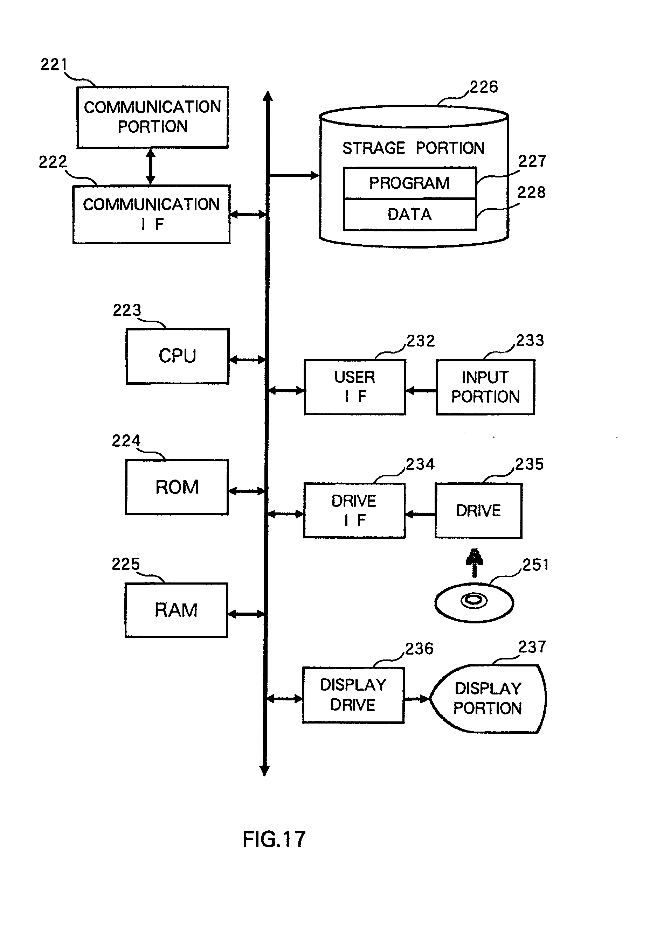

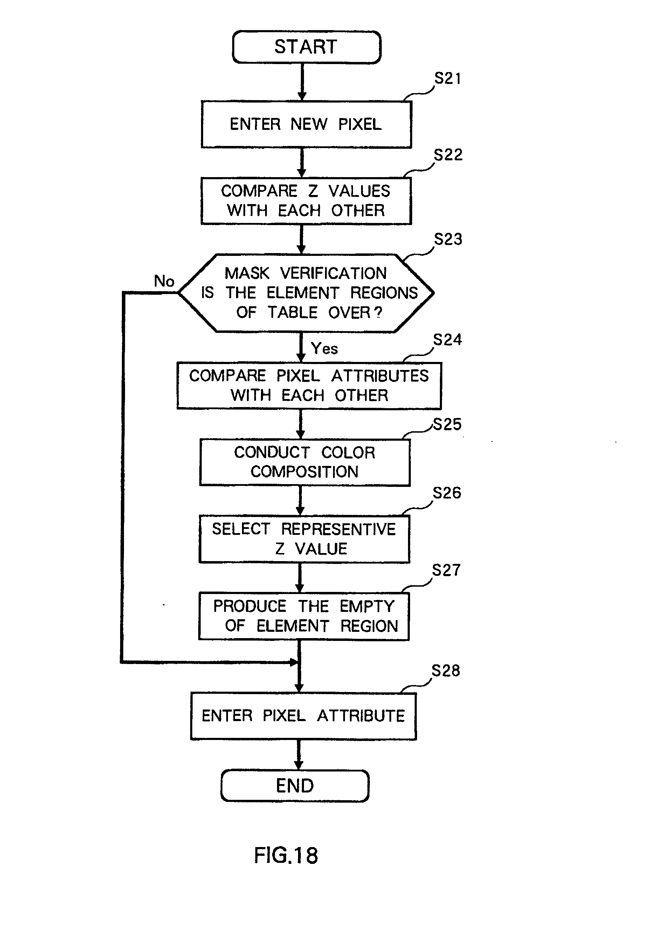

Subsequently, an example in which the characterized rendering process according to the present invention is implemented in cooperation with a general-purpose computer and the rendering processing program will be described with reference to Figs. 17 and 18.

Fig. 17 shows a structural example of a main portion of the general-purpose computer, and Fig. 18 is a flowchart showing a process which is executed by a CPU 223 of the computer.

In Fig. 17, a storage portion 226 is made up of, for example, a hard disc and its drive. The storage portion 226 stores therein operating system program, rendering processing program 227 according to the present invention which is installed from a recording medium such as a CD-ROM or a DVD-ROM or installed through a communication line, various data 228 such as figure information for rendering a polygon, pixel attributes such as the colors of polygons and a Z value representative of a distance from a virtual point of sight in a depthwise direction, a texture for determining patterns, and so on.

A communication portion 221 is a communication device for conducting data communication with an external system or device, such as a modem for connection with an analog public telephone line, a cable modem for connection with a cable television network, a terminal adapter for connection with an ISDN (Integrated Services Digital Network) or a model for connection with an ADSL (Asymmetric Digital Subscriber Line). A communication IF portion 222 is an interface device that conducts protocol transformation for enabling receiving and transmitting data between the communication portion 221 and an internal bus. An input portion 233 is an input device such as a keyboard, a mouse or a touch panel, and a user IF portion 232 is an interface device for supplying a signal from the input portion 233 to the interior. A drive portion 235 is a drive device for reading various program such as the rendering processing program and/or data from a disc medium 251 such as a CD-ROM or a DVD-ROM. A drive IF portion 234 is an interface device for supplying a signal from the drive portion 235 to the interior. A display portion 237 is a display device such as a CRT (cathode ray tube) or liquid crystal, and a display drive portion 236 is a drive device that drives the display portion 237 for display.

The CPU 223 controls all of the operation of a personal computer on the basis of the operating system and the program 227 which are stored in the storage portion 226. A ROM 224 is formed of a rewritable non-volatile memory such as a flash memory, and stores a BIOS (Basic Input/Output System) of the computer and various initial set values therein. A RAM 225 is appropriately loaded with a part of the program and the data which are read from the hard disc of the storage portion 226, and is used as a rendering buffer having the subpixel buffers and the pixel buffers (color buffers, Z buffers).

The CPU 223 executes the rendering processing program 227 which has been read from the hard disc of the storage portion 226 and loaded in the RAM 225, to thereby conduct the same operation as the above-described rendering process in the procedure shown in Fig. 18.

(Step S21)

A new pixel (subpixel) is entered on the rendering buffer of the RAM 225 to obtain a subpixel mask.

(Step S22)

All of the Z values within the pixel buffer in the rendering buffer are compared with the Z value of the entered pixel, and data of portions that are positioned backward in both of the subpixel rendering regions of the subpixel buffer and a region of the subpixel mask for the entered pixel is obtained by the logical AND operation, and the logical AND operation results which are obtained over the overall region of the subpixel buffer are subjected to the logical OR operation and then generated as a subpixel mask for overwriting. The above processing corresponds to the hidden surface removal processing in the hidden surface removal block 75 shown in Fig. 5.

(Step S23)

The subpixel mask that has been subjected to the hidden surface removal processing is overwritten on the subpixel buffer, and it is verified whether the kinds of pixel attributes of the subpixel to be rendered in the subpixel buffer exceed the number of element regions of the pixel buffer, or not. In the process of Step S23, if the kinds of pixel attributes exceed the number of element regions, the CPU 223 advances the processing to Step S24 whereas if the kinds of pixel attributes do not exceed the number of element regions, the CPU 223 advances the processing to Step S28.

(Step S24)

The most approximate attributes are detected among the pixel attributes of the pixel buffer and the pixel attributes of the entered subpixel are detected. The detection of the most approximate pixel attributes are made by comparison of the Z values, comparison of the color brightness, comparison of the respective values of R, G and B, and so on. From the viewpoints of simplifying the processing, the Z values are compared with each other, and for example, the combination of the Z values a difference (absolute value) of which is small is specified.

(Step S25)

The color values which correspond to the most approximate subpixels are integrated into one color value. In this example, assuming that the color value of one of two subpixels which are detected as the most approximate subpixels is CA, the color value of the other subpixels is CB, the number of subpixels having the color value of the one subpixel is NA, and the number of subpixels having the color value of the other subpixel is NB, the CPU 223 obtains the composite color value NC through the following operation expression.

$$NC = (CA \times NA + CB \times NB)/(NA + NB)$$

(Step S26)

One representative Z value which is registered in the pixel buffer in addition to the composite color value is selected. In this example, the Z value that corresponds to the color value given to the larger number of subpixels is selected as the representative Z value.

(Step S27)

In composing the colors, the color values are temporarily stored in the two element regions of the pixel buffer, and after those color values that have been temporarily stored are integrated into the composite color value, and the composite color value is registered in any one of those element regions, the other element region is then returned to an empty region. In the case where the color value of the entered pixel is integrated with the color value which is read from the element region, after the CPU 223 substitutes the composite color value for the entered pixel once, the CPU 223 returns the element region to the empty region.

(Step S28)

The empty region of the pixel buffer is selected, and the composite color value and the representative Z value are registered in the selected empty region.
As was described above, according to the present invention, when there is a new pixel to be rendered, it is verified whether an empty region for registering the pixel attributes of the new pixel exists in the pixel buffer, or not, and when no empty region exists, the pixel attribute of the new pixel and one or plural pixel attributes which have been already registered are compared with each other, and a plurality of pixels having the most approximate pixel attributes are integrated together. Therefore, even if an image with a high resolution is rendered, nearly accurate colors can be stably reproduced while the required capacity of the pixel buffer which is prepared in advance is reduced and the color degradation is suppressed as much as possible. For that reason, high-quality antialiasing can be realized with a small amount of resources.

Also, since it is unnecessary to conduct high-speed memory access as in the conventional antialiasing, and the rendering direction is not restricted, the rendering process can be conducted at the low costs.

The above description is given of an example of the present invention. For that reason, it is needless to say that the present invention is not limited to or by the above-mentioned embodiment, and various modifications are enabled depending on designs or the like within the scope that departs from the technical concept according to the present invention.

In this embodiment, pixel attributes are compared with each other, and determining whether pixels are approximate or not. Alternatively, such determination can be derived from elements other than pixel attributes. For example, such determination can be derived from pixels rendered in the buffer. Further, such determination can be simply derived from the number of pixels. In integration of pixels, it may be constructed such that simply comparing new pixels (or new subpixels) with having rendered pixel, and determining the pixel which has greatest number in the rendering as integrated pixel.

Further, in case selecting pixel attribute, in this embodiment, color value and Z value are selected, however, $\alpha$ value, brightness, vector value, normal line, texture distortion value can be selected and the procedure described in this embodiment can be similarly applied. Further, it may constructed such that color value etc. are obtained by some method other than the present invention, and only $\alpha$ value is obtained by the procedure according to the present invention.

The foregoing description of the preferred embodiments of the invention has been presented for purposes of illustration and description. It is not intended to be exhaustive or to limit the invention to the precise form disclosed, and modifications and variations are possible in light of the above teachings or may be acquired from practice of the invention. The embodiments were chosen and described in order to explain the principles of the invention and its practical application to enable one skilled in the art to utilize the invention in various embodiments and with various modifications as are suited to the particular use contemplated. It is intended that the scope of the invention be defined by the claims appended hereto, and their equivalents.

This application is based on Japanese Patent Application Nos. 2001-294507 filed September 26, 2001 and 2002-276218 filed September 20, 2002, and including specification, claims, drawings and summary. The disclosures of the above Japanese Patent Applications are incorporated herein by reference in its entirety.

**Claims**

1. A rendering processing method in a computer product which includes a buffer (67) having a pixel rendering region corresponding to a display region of a display (55) and a processor (52) that renders the pixels to be displayed on the display in the pixel rendering region, the method comprising the steps, which are executed by the processor *(52),* of:

    when the new pixel to be rendered exists, comparing, by the processor (52), a feature of the new pixel with that of one or plural pixel which including pixel rendered in the buffer (67) to detect combination of pixels in which the features mostly resembles each other,
    integrating, by the processor (52), the features of the detected pixels.

2. A rendering processing method in a computer product which includes a first buffer (68) having a pixel rendering region corresponding to a display region of a display (55), a second buffer (69, 70) in which pixel attributes representing features of the pixels are registered, and a processor (52) that registers the pixel attributes of the pixels to be displayed on the display in the second buffer (69, 70) and renders the pixels in the pixel rendering region in accordance with the registered pixel attributes, the method comprising the steps, which are executed by the processor (52), of:

    verifying whether an empty region for registering a pixel attribute of a new pixel therein exists in the second buffer (69, 70), or not, when the new pixel to be rendered exists;
    comparing the pixel attribute of the new pixel with one or plural pixel attributes which have been registered in the second buffer (69, 70) to detect a plurality of pixels having the most approximate pixel attributes; and

integrating the pixel attributes of the plurality of pixels that have been detected together.

3. The rendering processing method as claimed in claim 2, wherein when all of the integrated pixel attributes have been already registered, the pixel attribute of the new pixel or the integrated pixel attributes is registered in at least one of the registered regions.

4. The rendering processing method as claimed in claim 2, wherein a pixel rendering region in which no rendering is required remains in the first buffer (68) in spite of rendering of the new pixel, inhibiting registration of the pixel attributes of the new pixel in the second buffer (69, 70).

5. The rendering processing method as claimed in claim 2, wherein an empty region exists in the second buffer (69, 70), and a pixel rendering region in which no rendering is required remains in the first buffer (68) in spite of rendering of the new pixel, integrating the pixel attributes of pixels in the first buffer (68), excluding the remaining pixel in which no rendering is required.

6. The rendering processing method as claimed in claim 2, wherein the Z value representing depth from a predetermined position is included in the pixel attribute, the processor (52) executes a hidden surface removal process that compares the Z value of the new pixel with the Z value that have been already registered in the second buffer (69, 70), detects a pixel that is positioned relatively backward when being viewed from the display screen, and does not allow the detected pixel to be displayed on the display screen prior to the verifying step.

7. The rendering processing method as claimed in claim 2, wherein the Z value representing depth from a predetermined position is included in the pixel attribute, the processor (52) executes the integrating process by integrating other pixel attributes of plurality of pixels having the most approximate Z values into one composite pixel attribute at a distribution ratio corresponding to the number of pixels having the respective color values.

8. The rendering processing method as claimed in claim 1, wherein the processor (52) overwrites the integrated pixel attribute on one of the pixel attributes being registered in the second buffer (69, 70) with its attribute not being integrated.

9. The rendering processing method as claimed in claim 8, wherein the processor (52) selects a Z value of a pixel having the largest number of renderings from the plurality of pixels having the most approximate Z values as one representative X value, and registers the selected representative Z value in a Z-value registration region which is associated with the registration region for the integrated pixel attribute.

10. A rendering processing method in a computer product which includes a first buffer (68) having a pixel rendering region corresponding to a display region of a display (55), a second buffer (69, 70) in which pixel attributes representing features of pixels are registered, and a processor (52) that registers the pixel attributes of the pixels to be displayed on the display in the second buffer (69, 70) and renders the pixels in the pixel rendering region in accordance with the registered pixel attributes, the method comprising the steps of:

verifying whether pixel attributes which are different from a pixel attribute of a new pixel are registered in the second buffer (69, 70), or not, by the processor (52), when the new pixel to be rendered exists; and integrating the pixel attributes together by the processor (52) when the pixel attributes which are different from the pixel attribute of the new pixel are registered.

11. A rendering processing method in a computer product which includes a subpixel buffer having a plurality of subpixel rendering regions corresponding to a display region for each pixel of a display (55) and having a subpixel which is obtained by over-sampling rendered in each of the subpixel rendering regions, a pixel buffer for registering a pixel attribute which represents a pixel feature of the subpixel including depth from a predetermined position, and a processor (52) that registers the pixel attribute of the subpixel to be displayed on the display in the pixel buffer, and renders the subpixel in the subpixel rendering region in accordance with the registered pixel attribute, the method comprising the steps, which are executed by the processor (52), of:

comparing, when the new subpixel to be rendered exists, a Z value of a new subpixel with Z values registered in the pixel buffer to detect a subpixel, which included the new subpixel, that is positioned relatively backward when being viewed from a display screen, and generating a subpixel mask that masks the subpixel rendering region for rendering the detected subpixel;

verifying, when the subpixels to be rendered exist in the generated subpixel mask, whether an empty region for registering pixel attributes of the subpixels to be rendered exists or not;

comparing, when the empty region for registering does not exists, the pixel attribute of the new subpixel with that of registered subpixel to detect a plurality of subpixels having the most approximate pixel attributes; and integrating the pixel attributes of the plurality of subpixels detected, to suppress an increase in the registration region for pixel attribute in the pixel buffer.

12. The rendering processing method as claimed in claim 11, wherein a pixel-rendering region in which no rendering is required remains in the subpixel buffer in spite of rendering of the new pixel, inhibiting registration of the pixel attributes of the new pixel in the pixel buffer.

13. The rendering processing method as claimed in claim 11, wherein an empty region exists in the pixel buffer, and a pixel rendering region in which no rendering is required remains in the subpixel buffer in spite of rendering of the new pixel, integrating the pixel attributes of pixels in the subpixel buffer, excluding the remaining pixel in which no rendering is required.

14. The rendering processing method as claimed in claim 11, wherein when all of the pixel attribute of most approximate subpixels have been already registered, the processor (52) integrates those pixel attributes into one integrated attribute at a distribution ratio corresponding to the number of pixels having an identical pixel attribute, overwrites the composite color value on any one registration region for the plurality of pixel attributes to be integrated, and registers the pixel attribute of the new subpixel in other regions.

15. The rendering processing method as claimed in claim 11, wherein the number of registration enable regions for the pixel attribute is limited with the number of element regions which is determined in accordance with the bit depth of the subpixel to be processed.

16. A rendering processing device comprising:

a first buffer (68) having a pixel rendering region corresponding to a display region of a display (55);
a second buffer (69, 70) in which pixel attributes representing pixel features are registered; and
a processor (52) that registers the pixel attributes of the pixels to be displayed on the display in the second buffer (69, 70) and renders the pixels in the pixel rendering region in accordance with the registered pixel attributes,

wherein the processor (52) verifies whether an empty region for registering a pixel attribute of a new pixel therein exists in the second buffer (69, 70), or not, when the new pixel to be rendered exists, compares the pixel attribute of the new pixel with one or plural pixel attributes which have been registered in the second buffer (69, 70) to detect a plurality of pixels having the most approximate pixel attributes, and integrates the pixel attributes of the plurality of pixels that have been detected together.

17. The rendering processing device as claimed in claim 16, wherein the pixel rendering region is divided into a plurality of subpixel rendering regions with respect to a display region of each pixel in the display,
wherein the subpixels which are obtained by over-sampling are rendered in the respective subpixel rendering regions,
wherein the pixel attribute includes Z value representing depth from a predetermined position, and
wherein the second buffer (69, 70) is formed with at least a Z buffer (70) for registering the Z values therein.

18. The rendering processing device as claimed in claim 17, wherein the processor (52) compares the Z value of the new pixel with all of the Z values that have been registered in the Z buffer (70), detects the subpixel rendering region for rendering the subpixel, including the new subpixel, that is positioned relatively backward, and generates data where the detected subpixel rendering region is masked.

19. The rendering processing device as claimed in claim 18, wherein the processor (52) processes the subpixel mask which is obtained by implementing the logical OR operation of the generated data related to all of the subpixels that constitute the new pixel as data to be overwritten in the pixel rendering region.

20. The rendering processing device as claimed in claim 16, wherein when one bank is formed of a rendering buffer for pixel rendering, another bank includes a two-bank structured frame buffer that changes over to a display buffer for displaying the rendered pixels on the display, and

wherein the first buffer (68) and the second buffer (69, 70) are temporarily formed in the rendering buffer.

21. A semiconductor device on which there are mounted a first buffer (68) having a pixel rendering region corresponding to a display region of a display (55) and a second buffer (69, 70) in which pixel attributes representing pixel features are registered, or which is so structured as to access to the first buffer (68) and the second buffer (69, 70), and on which there is mounted a processor (52) that registers the pixel attribute of a pixel to be displayed on the display in the second buffer (69, 70) and renders the pixel in the pixel rendering region in accordance with the pixel attribute that has been registered in the second buffer (69, 70),

wherein the processor (52) verifies whether an empty region for registering a pixel attribute of a new pixel therein exists in the second buffer (69, 70), or not, when the new pixel to be rendered exists, compares the pixel attribute of the new pixel with one or plural pixel attributes which have been registered in the second buffer (69, 70) to detect a plurality of pixels having the most approximate pixel attributes, and integrates the pixel attributes of the plurality of pixels that have been detected together.

22. The semiconductor device as claimed in claim 21, wherein the processor (52) conducts the operation in cooperation with other processing means that is disposed in the exterior of the device.

23. A rendering processing program which can be read by a computer which includes a memory device and is connected with a display,

wherein the rendering processing program allows a first buffer (68) having a pixel rendering region corresponding to a display region of the display and a second buffer (69, 70) in which pixel attributes representing pixel features are registered to be formed in the memory device,

wherein the .rendering processing program gives functions of registering the pixel attribute of a pixel to be displayed on the display in the second buffer (69, 70) and rendering the pixel in the pixel rendering region in accordance with the registered pixel attribute to a processor (52) mounted on the computer, and

wherein the rendering processing program operates the processor (52) so as to verify whether an empty region for registering a pixel attribute of a new pixel therein exists in the second buffer (69, 70), or not, when the new pixel to be rendered exists, compare the pixel attribute of the new pixel with one or plural pixel attributes which have been registered in the second buffer (69, 70) to detect a plurality of pixels having the most approximate pixel attributes, and integrate the pixel attributes of the plurality of pixels that have been detected together.

24. A computer readable recording medium that records the rendering processing program as claimed in claim 23.

SUBPIXEL BUFFER

PIXEL BUFFER

FIG.1A

FIG.1B

COLOR
BUFFER    Z BUFFER

SUBPIXEL BUFFER

PIXEL BUFFER

FIG.1C

COLOR
BUFFER    Z BUFFER

FIG.1D

START

S11

No — IS THERE NEW SUBPIXEL?

Yes

S12

COMPARE Z VALUES WITH EACH OTHER

S13

MASK VERIFICATION IS THERE EMPTY REGION FOR REGISTERING PIXEL ATTRIBUTE?

Yes

No

S14

DETECT THE COMBINATION OF PLURAL BEST APPROXIMATE SUBPIXELS

S15

INTEGRATE THE PIXEL ATTRIBUTES OF THE DETECTED SUBPIXELS

S16

No — CAN EMPTY REGION BE FORMED?

Yes

S17

FORM EMPTY REGION

S18

ENTER PIXEL ATTRIBUTE

END

FIG.2

FIG.3

66

75

Zin —→

Z(0) —→

Z(1) —→     HIDDEN SURFACE
            REMOVAL BLOCK
Min —→

Mbuf —→

Zin、Z(0)、Z(1)          Mbuf

                        Mow

                                        76

            MASK COMPOSITE／Z              —→ Mbuf
            SELECT BLOCK
                                          —→ Z(0)

                                          —→ Z(1)

        BR              BS

                                        77

Cin —→

            COLOR COMPOSITE              —→ C(0)
C(0) —→     BLOCK

C(1) —→                                  —→ C(1)

FIG.4

FIG.5

FIG.6

EP 1 298 595 A2

EP 1 298 595 A2

77

BR

BS

105

106

Cin

C(0)

C(1)

SELECTOR PORTION

COMPOSITE PORTION

C(0), C(1)

FIG.7

|   | 1 | 2 | 3 | 4 |
|---|---|---|---|---|
| 1 | p(1, 1) | p(1, 2) | p(1, 3) | p(1, 4) |
| 2 | p(2, 1) | p(2, 2) | p(2, 3) | p(2, 4) |
| 3 | p(3, 1) | p(3, 2) | p(3, 3) | p(3, 4) |
| 4 | p(4, 1) | p(4, 2) | p(4, 3) | p(4, 4) |

FIG.8

110

< SUBPIXEL BUFFER >

FIG.9A

8

8 (EMPTY)    2 (0)

(1)    3

10    AFTER HSR (0)

11    AFTER HSR (1)

12    AFTER HSR (EMPTY)

FIG.9C

111

(0) | — | — |
(1) | — | — |

< PIXEL BUFFER >

FIG.9B

SUBPIXEL MSK (16BITS)

FIG.10

WHEN ENTERED

| 13 | 13 | 13 | 14 |
| 13 | 13 | 14 | 14 |
| 13 | 14 | 14 | 14 |
| 14 | 14 | 14 | 14 |

112

AFTER  HSR

| 15 | 15 | 15 | 16 |
| 15 | 15 | 16 | 16 |
| 15 | 16 | 16 | 16 |
| 16 | 16 | 16 | 16 |

113

▦ C0. Z0

SUBPIXEL  MASK

FIG.11A

<SUBPIXEL  BUFFER>

| 12 | 12 | 12 | 10 |
| 12 | 12 | 10 | 10 |
| 12 | 10 | 10 | 10 |
| 10 | 10 | 10 | 10 |

114

<PIXEL  BUFFER>

| | | |
|---|---|---|
| (0) | — | — |
| (1) | — | — |

111

RENDERING  BUFFER  AFTER  HSR

FIG.11B

<SUBPIXEL  BUFFER>

| 3 | 3 | 3 | 8 |
| 3 | 3 | 8 | 8 |
| 3 | 8 | 8 | 8 |
| 8 | 8 | 8 | 8 |

116

<PIXEL  BUFFER>

| | | |
|---|---|---|
| (0) | — | — |
| (1) | C0 | Z0 |

117

RENDERING  BUFFER  AFTER  COMPOSITION

FIG.11C

WHEN ENTERED

| 14 | 14 | 14 | 14 |
| 14 | 14 | 14 | 14 |
| 14 | 13 | 14 | 14 |
| 13 | 13 | 14 | 14 |

118

AFTER HSR

| 16 | 16 | 16 | 16 |
| 16 | 16 | 16 | 16 |
| 16 | 15 | 16 | 16 |
| 15 | 15 | 16 | 16 |

119

▨ $C_1$, $Z_1$  num ($Z_1$) < num ($Z_0$)

SUBPIXEL MASK

FIG.12A

<SUBPIXEL BUFFER>

| 11 | 11 | 11 | 10 |
| 11 | 11 | 10 | 10 |
| 11 | 12 | 10 | 10 |
| 12 | 12 | 10 | 10 |

120

<PIXEL BUFFER>

| (0) | — | — |
| (1) | C0 | Z0 |

117

RENDERING BUFFER AFTER HSR

FIG.12B

<SUBPIXEL BUFFER>

| 3 | 3 | 3 | 8 |
| 3 | 3 | 8 | 8 |
| 3 | 3 | 8 | 8 |
| 3 | 3 | 8 | 8 |

122

<PIXEL BUFFER>

| (0) | — | — |
| (1) | Cr0 | Z0 |

123

RENDERING BUFFER AFTER COMPOSITION

FIG.12C

36

WHEN ENTERED

| 14 | 14 | 14 | 13 |
|----|----|----|----|
| 14 | 14 | 13 | 13 |
| 14 | 14 | 13 | 13 |
| 14 | 14 | 13 | 13 |

124

AFTER HSR

| 16 | 16 | 16 | 15 |
|----|----|----|----|
| 16 | 16 | 15 | 15 |
| 16 | 16 | 15 | 15 |
| 16 | 16 | 15 | 15 |

125

▦ C2, Z2

SUBPIXEL MASK
FIG.13A

<SUBPIXEL BUFFER>

| 1·1 | 1·1 | 1·1 | 1·2 |
|-----|-----|-----|-----|
| 1·1 | 1·1 | 1·2 | 1·2 |
| 1·1 | 1·1 | 1·2 | 1·2 |
| 1·1 | 1·1 | 1·2 | 1·2 |

126

<PIXEL BUFFER>

| (0) | — | — |
|-----|-----|-----|
| (1) | Cr0 | Z0 |

123

RENDERING BUFFER AFTER HSR
FIG.13B

<SUBPIXEL BUFFER>

| 3 | 3 | 3 | 2 |
|---|---|---|---|
| 3 | 3 | 2 | 2 |
| 3 | 3 | 2 | 2 |
| 3 | 3 | 2 | 2 |

128

<PIXEL BUFFER>

| (0) | C2 | Z2 |
|-----|-----|-----|
| (1) | Cr0 | Z0 |

129

RENDERING BUFFER AFTER COMPOSITION
FIG.13C

WHEN ENTERED

| 14 | 14 | 14 | 14 |
| 13 | 14 | 14 | 14 |
| 13 | 13 | 14 | 14 |
| 13 | 13 | 14 | 14 |

130

AFTER HSR

| 16 | 16 | 16 | 16 |
| 15 | 16 | 16 | 16 |
| 15 | 15 | 16 | 16 |
| 15 | 15 | 16 | 16 |

131

C3, Z3    $Z3 < Z2 << Z0$    num $(Z3) >$ num$(Z0)$

SUBPIXEL MASK
FIG.14A

<SUBPIXEL BUFFER>

| 11 | 11 | 11 | 10 |
| 12 | 11 | 10 | 10 |
| 12 | 12 | 10 | 10 |
| 12 | 12 | 10 | 10 |

132

<PIXEL BUFFER>

| (0) | C2  | Z2 |
| (1) | Cr0 | Z0 |

129

RENDERING BUFFER AFTER HSR
FIG.14B

<SUBPIXEL BUFFER>

| 3 | 3 | 3 | 2 |
| 2 | 3 | 2 | 2 |
| 2 | 2 | 2 | 2 |
| 2 | 2 | 2 | 2 |

134

<PIXEL BUFFER>

| (0) | Cr1 | Z2 |
| (1) | Cr0 | Z0 |

135

RENDERING BUFFER AFTER COMPOSITION
FIG.14C

WHEN ENTERED

| 14 | 13 | 13 | 14 |
| 14 | 13 | 13 | 14 |
| 14 | 13 | 13 | 14 |
| 14 | 13 | 13 | 14 |

136

AFTER HSR

| 16 | 15 | 15 | 16 |
| 16 | 15 | 16 | 16 |
| 16 | 16 | 16 | 16 |
| 16 | 16 | 16 | 16 |

137

C4, Z4    $Z2 \ll Z4 < Z0$    $num(Z4) > num(Z0)$

SUBPIXEL MASK

FIG.15A

<SUBPIXEL BUFFER>

| 11 | 12 | 12 | 10 |
| 10 | 12 | 10 | 10 |
| 10 | 10 | 10 | 10 |
| 10 | 10 | 10 | 10 |

138

<PIXEL BUFFER>

| (0) | Cr1 | Z2 |
| (1) | Cr0 | Z0 |

135

RENDERING BUFFER AFTER HSR

FIG.15B

<SUBPIXEL BUFFER>

| 3 | 3 | 3 | 2 |
| 2 | 3 | 2 | 2 |
| 2 | 2 | 2 | 2 |
| 2 | 2 | 2 | 2 |

140

<PIXEL BUFFER>

| (0) | Cr1 | Z2 |
| (1) | Cr2 | Z4 |

141

RENDERING BUFFER AFTER COMPOSITION

FIG.15C

39

WHEN ENTERED

AFTER HSR

142

143

C5, Z5    Z5≪Z2＜Z4    num (Z2) ＞num(Z4)

SUBPIXEL MASK
FIG.16A

＜SUBPIXEL BUFFER＞

144

＜PIXEL BUFFER＞

| (0) | Cr1 | Z2 |
|-----|-----|-----|
| (1) | Cr2 | Z4 |

141

RENDERING BUFFER AFTER HSR
FIG.16B

＜SUBPIXEL BUFFER＞

146

＜PIXEL BUFFER＞

| (0) | C5 | Z5 |
|-----|-----|-----|
| (1) | Cr3 | Z2 |

147

RENDERING BUFFER AFTER COMPOSITION
FIG.16C

221 COMMUNICATION PORTION

226 STRAGE PORTION
227 PROGRAM
228 DATA

222 COMMUNICATION I F

223 CPU

232 USER I F

233 INPUT PORTION

224 ROM

234 DRIVE I F

235 DRIVE

251

225 RAM

236 DISPLAY DRIVE

237 DISPLAY PORTION

FIG.17

```
                    ┌─────────────────────┐
                    │        START        │
                    └─────────────────────┘
                               │
                               ▼                    S21
                    ┌─────────────────────┐
                    │   ENTER NEW PIXEL    │
                    └─────────────────────┘
                               │
                               ▼                    S22
                    ┌─────────────────────┐
                    │  COMPARE Z VALUES    │
                    │   WITH EACH OTHER    │
                    └─────────────────────┘
                               │
                               ▼                    S23
                    ╱─────────────────────╲
          No       ╱   MASK VERIFICATION    ╲
    ◄─────────────│  IS THE ELEMENT REGIONS │
                   ╲    OF TABLE OVER?      ╱
                    ╲─────────────────────╱
                               │ Yes              S24
                               ▼
                    ┌─────────────────────┐
                    │ COMPARE PIXEL ATTRIBUTES │
                    │   WITH EACH OTHER    │
                    └─────────────────────┘
                               │
                               ▼                    S25
                    ┌─────────────────────┐
                    │   CONDUCT COLOR      │
                    │    COMPOSITION       │
                    └─────────────────────┘
                               │
                               ▼                    S26
                    ┌─────────────────────┐
                    │ SELECT REPRESENTIVE  │
                    │      Z VALUE         │
                    └─────────────────────┘
                               │
                               ▼                    S27
                    ┌─────────────────────┐
                    │  PRODUCE THE EMPTY   │
                    │  OF ELEMENT REGION   │
                    └─────────────────────┘
                               │
                               ▼                    S28
                    ┌─────────────────────┐
                    │ ENTER PIXEL ATTRIBUTE │
                    └─────────────────────┘
                               │
                               ▼
                    ┌─────────────────────┐
                    │         END          │
                    └─────────────────────┘
```

FIG.18